# EUROPÄISCHE PATENTSCHRIFT

(11) **EP 4 094 571 B1**
(45) Veröffentlichungstag und Bekanntmachung des Hinweises auf die Patenterteilung: **04.06.2025**
(21) Anmeldenummer: 22170515.5
(22) Anmeldetag: 28.04.2022
(51) Int. Cl.: A01G 18/60, A01G 18/70, B65G 15/28, B65B 1/32, A01D 46/00

(54) **VORRICHTUNG ZUR KULTIVIERUNG UND ERNTE VON PILZEN**
SYSTEM FOR CULTIVATING AND HARVESTING MUSHROOMS
DISPOSITIF DE CULTURE ET DE RÉCOLTE DES CHAMPIGNONS

(30) Priorität: 28.05.2021 DE 102021113916; 10.06.2021 DE 102021114939; 20.10.2021 DE 202021105746 U
(43) Veröffentlichungstag der Anmeldung: 30.11.2022
(60) Teilanmeldung: 24221851.9
(73) Patentinhaber: Pilzland Produktions GmbH, 49429 Visbek-Rechterfeld (DE)
(72) Erfinder: Wempe, Andreas, 49429 Visbek (DE)
(74) Vertreter: Schneiders & Behrendt Bochum

(56) Entgegenhaltungen:
- EP-A1- 3 750 394
- EP-A2- 3 815 518

## Beschreibung

Die Erfindung betrifft eine Vorrichtung zur Kultivierung und Ernte von Pilzen, mit wenigstens einem Pflückgestell, wobei die auf einem Substrat wachsenden Pilze auf dem Pflückgestell in wenigstens einer Ernteebene angeordnet sind, und mit wenigstens einem sich entlang des Pflückgestells erstreckenden Transportband, das wenigstens eine Ausnehmung zur Aufnahme der von dem Substrat geernteten Pilzen aufweist, wobei das Transportband dazu ausgelegt ist, die mit dem Stiel in der Ausnehmung aufgenommenen Pilze zu fördern.

Eine solche Vorrichtung ist aus EP 3 750 394 A1 bekannt.

Allgemein ist bekannt, dass Pilze in klimatisierten und je nach Pilzart in abgedunkelten oder hellen Räumen gezüchtet werden. Die auf einem Substrat, wachsenden Pilze sind dabei bevorzugt in mehreren Ebenen übereinander auf Stellagen in Beeten angeordnet, wobei das Substrat eine auf die Pilzart abgestimmte Zusammensetzung aufweist. Hierdurch wird der Zuchtraum möglichst effizient genutzt und die für die Kultivierung erforderliche Bodenfläche möglichst gering gehalten. Nachdem die Pilze eine bestimmte Größe erreicht haben, werden sie in regelmäßigen Abständen manuell abgeerntet. Damit die Pilze möglichst effektiv gepflückt werden können, ist es aus dem Stand der Technik bekannt, die erntereifen Pilze auf ein Pflückgestell zu überführen. Auf dem Pflückgestell befinden sich die Pilze bevorzugt in einer Ebene, so dass die neben dem Gestell auf dem Boden stehenden PflückerInnen an die Pilze gut herankommen und die Pilze ohne Zusatzeinrichtungen, wie Podeste oder Lifte, leicht pflücken können. Die Pflückgestelle weisen somit eine geeignete Arbeitshöhe auf. Die PflückerInnen pflücken bei den bekannten Vorrichtungen die Pilze direkt in Behältnisse, in denen die Pilze später dann auch in den Handel kommen. Die PflückerInnen haben dabei dafür Sorge zu tragen, dass jedes Behältnis das korrekte Füllgewicht erhält.

Nachteilig an dem bekannten System ist, dass sich damit nur beschränkte Pflückleistungen erzielen lassen, da der gesamte Pflück- und Packvorgang manuell vollzogen wird. Unter Pflückleistung versteht man die Menge von Pilzen, die pro Zeiteinheit geerntet und handelsfertig verpackt werden. Im Pilzanbau machen die Pflückkosten und hier insbesondere die Personalkosten einen großen Anteil an den Produktionskosten aus, so dass ein Bedarf an Vorrichtungen besteht, die eine Erhöhung der Pflückleistung ermöglichen.

Bekannt ist es weiterhin aus der DE 10 2015 105 606 A1, zum Abpacken der gepflückten Pilze in für den Verkauf im Einzelhandel bestimmten Behältnissen (Schalen) einen Automaten zu verwenden, dem die Pilze mittels eines Förderers zugeführt werden, wobei ein Greiforgan des Automaten die Pilze von dem Förderer aufnimmt und in die in seinem Zugriffbereich befindlichen Schalen unter gleichzeitiger Wiegung derselben ablegt. Auf diese Weise werden die Schalen vollautomatisch mit dem gewünschten Gewicht befüllt. Es zeigt sich, dass die Handhabung der empfindlichen Pilze mit dem Greiforgan problematisch ist. Das Greiforgan kann die Pilze bei zu festem Ergreifen beschädigen. Bei zu sanftem Greifen werden die Pilze nicht zuverlässig gegriffen und fallen aus dem Greiforgan heraus. Außerdem ist der Automat mit dem Greiforgan kompliziert in der Herstellung, wartungsintensiv und vergleichsweise teuer.

Die EP 3 815 518 A2 beschreibt ein Transportband zum Transport von Pilzen, das wenigstens eine Ausnehmung zur Aufnahme der von einem Substrat geernteten Pilzen aufweist, wobei das Transportband dazu ausgelegt ist, die mit dem Stiel in der Ausnehmung aufgenommenen Pilze zu fördern. Nachteilig an der beschriebenen Lösung ist, dass die Pilze nach dem Transport auf dem Transportband noch an einer Sortierstation sortiert werden müssen, bevor sie verpackt werden können.

Es ist daher Aufgabe der Erfindung, eine verbesserte Vorrichtung zur Kultivierung und Ernte von Pilzen anzugeben, die eine einfache, sichere und schnelle Ernte ermöglicht. Insbesondere sollen die Pflückkosten einschließlich des Abpackens der Pilze in Schalen dadurch reduziert werden, dass ein frühzeitiges Sortieren der Pilze in Qualitätsklassen erfolgen kann.

Gelöst wird diese Aufgabe durch eine Vorrichtung mit den Merkmalen des Anspruchs 1.

Dadurch, dass eine an einer Abwurfstelle des Transportbandes angeordnete Abwurfeinrichtung vorgesehen ist, die dazu ausgebildet ist, die Förderbewegung der aufgenommenen Pilze in eine Abwurfbewegung umzusetzen, wobei die Abwurfeinrichtung die Pilzstiele aus der Ausnehmung heraus bewegt, wonach die Pilze unter Schwerkraftwirkung von dem Transportband abgeworfen werden, kann eine einfache, sichere und schnelle Ernte ermöglicht werden. Die auf dem Transportband in der Ausnehmung aufgenommenen Pilze werden zu der Abwurfstelle gefördert und von der Abwurfeinrichtung unter Schwerkrafteinwirkung von dem Transportband abgeworfen. Aus diesem Grund ist kein komplizierter Automat mit Greiforgan erforderlich, der die Pilze von dem Transportband entnimmt. Damit können die von dem Substrat geernteten Pilze einfach und schnell von dem Transportband abtransportiert und zur weiteren Verpackung sicher und schonend von diesem abgeworfen werden. An der Abwurfstelle des Transportbandes können die Pilze anschließend sehr einfach weiter gehandhabt oder direkt in ein bereitstehendes Behältnis gefüllt werden. Damit lassen sich über das Transportband der Ort der Ernte und der Ort der Verpackung auf sehr einfache Weise örtlich voneinander trennen. Das Herausbewegen der Pilzstiele über die Abwurfeinrichtung aus der Ausnehmung schont das Erntegut, sodass die Pilze lediglich unter Schwerkrafteinwirkung von dem Transportband abgeworfen werden können. Dies ermöglicht eine einfache, schnelle und sichere Ernte der Pilze mit der erfindungsgemäßen Vorrichtung. Die Erntekosten werden gegenüber dem Stand der Technik weiter reduziert.

Aufgrund des vorzugsweise neben dem Pflückgestell verlaufenden Transportbandes können die PflückerInnen sehr effizient arbeiten. Sie pflücken die Pilze von den Beeten und legen sie direkt auf das Transportband ab. Die dabei zurückzulegenden Wege sind minimal. Das Transportband fördert die Pilze dann zur Weiterverarbeitung, die vorteilhafterweise automatisiert ist. Hierdurch kann die Pflückleistung wesentlich erhöht werden, so dass die Kosten insgesamt gesenkt werden.

Das Transportband ist vorzugsweise so ausgebildet, dass es einfach mit den einzeln geernteten Pilzen bestückt werden kann. Idealerweise verläuft das Transportband im Wesentlichen parallel zu dem Pflückgestell. Das Transportband kann von dem Pflückgestell unabhängig ausgebildet sein. Dies bedeutet, dass das Transportband eine eigene Tragkonstruktion bzw. Rahmenkonstruktion aufweist, die das Band trägt. Es ist aber auch denkbar, dass das Transportband an dem Pflückgestell befestigt bzw. in dieses konstruktiv integriert ist. Hierbei kann von einer eigenen Tragkonstruktion des Transportbands abgesehen werden. Bevorzugt ist das Transportband mit variabler Geschwindigkeit motorisch beweglich. Durch die variable Einstellbarkeit der Geschwindigkeit ist eine Anpassung an die Pflückgeschwindigkeit der die Pilze erntenden PflückerInnen möglich.

Erfindungsgemäß ist vorgesehen, dass wenigstens ein Transportband markierte Ausnehmungen aufweist, um die von dem Substrat geernteten Pilze nach Qualität sortiert in den markierten Ausnehmungen aufzunehmen. Mit der farblichen Markierung der Ausnehmungen ist eine einfache Möglichkeit gegeben, dass die PflückerInnen von dem Substrat geerntete Pilze nach Qualität sortiert auf die regulären Ausnehmungen und die farblich markierten Ausnehmungen aufgeteilt einsortieren. So kann bei der Ernte unmittelbar eine Qualitätssortierung durch die PflückerInnen vorgenommen werden.

Vorteilhafterweise erstreckt sich das Transportband entlang der gesamten Länge des Pflückgestells. Dies bietet den Vorteil, dass die die Pilze erntenden Personen überall entlang des Pflückgestells stehen können und die gepflückten Pilze unmittelbar auf dem Transportband zur Weiterverarbeitung ablegen können. Das Pflücken kann somit sehr effektiv erfolgen. Besonders bevorzugt erstreckt sich das Transportband über wenigstens ein Ende des Pflückgestells, idealerweise über dasjenige Ende, an dem sich die Abwurfeinrichtung befindet, hinaus.

Gemäß einer vorteilhaften Ausgestaltung der Erfindung ist vorgesehen, dass an dem Transportband eine Abtrennvorrichtung zum Abtrennen der Stielenden der auf dem Transportband aufgenommenen Pilze angeordnet ist, wobei die Abtrennvorrichtung mindestens eine in der Schnittposition verstellbare, vorzugsweise rotierende Schneide aufweist. Das Abtrennen der unteren Enden der Pilzstiele gehört zum Erntevorgang und ist für die Qualität der Endprodukte unerlässlich. Während die auf dem Transportband befindlichen Pilze transportiert werden, passieren sie die Abtrennvorrichtung, wodurch deren Pilzstielenden automatisch abgeschnitten werden. Durch das automatisierte Abtrennen, das im Stand der Technik manuell durch die PflückerInnen erfolgt, kann die Pflückleistung der erfindungsgemäßen Vorrichtung weiter verbessert werden. Ein weiterer Vorteil der automatischen Kürzung der Pilzstiele ist, dass ein möglichst gleichmäßiger und sauberer Schnitt der Pilzstiele erfolgt. Hierzu weist die Abtrennvorrichtung bevorzugt eine rotierende Schneide, besonders bevorzugt zwei gegenläufig rotierende Schneiden (z.B. Kreismesser) auf, wobei die Schneiden direkt unterhalb des Transportbandes, wo die Stiele der Pilze durch das Transportband nach unten ragen, angeordnet sind. Die Pilze werden mittels des Transportbandes an den rotierenden Schneiden vorbeigeführt bzw. zwischen den gegenläufigen Kreismessern hindurch geführt, wobei die Stielenden zuverlässig gemäß der gewünschten Länge abgetrennt werden. Durch einen nicht zu kurzen Abschnitt des Stiels bei der Ernte wird das Einzelgewicht der Pilze erhöht, wodurch insgesamt ein höherer Ernteertrag geschaffen werden kann. Mit der in der Schnittposition verstellbaren Schneide kann die Abtrennvorrichtung beispielsweise an länder- oder kundenspezifischen Anforderungen hinsichtlich der Stiellänge oder des Schnittwinkels angepasst werden.

Besonders bevorzugt ist eine Ausführungsform, die vorsieht, dass die Schneide höhenverstellbar ist, um die Stielenden der auf dem Transportband aufgenommenen Pilze in unterschiedlichen Stielhöhen abzutrennen. Über die Höhenverstellung der Schneide kann die Stiellänge der Pilze an länder- oder kundenspezifischen Anforderungen angepasst werden, bevor die Pilze in entsprechenden Anforderungen, Qualitäten, Größen, Ländern oder Kunden zugeordneten Behältnissen abgelegt werden. Ein solches Behältnis ist zum Beispiel eine Schale (aus Kunststoff oder Pappe), in der die Pilze für den Einzelhandel verpackt werden.

Eine besonders vorteilhafte Ausführung der Erfindung bezieht sich darauf, dass es sich bei der Ausnehmung des Transportbandes um wenigstens ein in das Transportband eingelassenes Loch handelt. In dem Loch lassen sich die Pilze einfach nach dem manuellen Pflücken durch die PflückerInnen schnell einsetzen. Dabei ist der Lochdurchmesser zweckmäßig größer als der größte zu erwartende Pilzstieldurchmesser und gleichzeitig kleiner als der kleinste zu erwartende Pilzkopfdurchmesser. Der in das Loch eingesetzte Pilz liegt dann mit der Unterseite des Kopfes auf dem Transportband an dessen Oberseite auf, während der Stiel das Loch nach unten durchragt.

Gemäß einer vorteilhaften Ausgestaltung der Erfindung ist vorgesehen, dass das Transportband mehrere eingelassene Löcher aufweist, wobei die Löcher einen gleichmäßigen Abstand zueinander entlang der Längsstreckung des Transportbandes aufweisen. Die Löcher sind dabei bevorzugt entlang des gesamten Transportbands angeordnet. Die Löcher können dabei unterschiedliche Durchmesser aufweisen. Der Abstand der Löcher ist zweckmäßig so gewählt, dass die Pilze voneinander ausreichend beabstandet sind.

Anstelle von Löchern kann es sich bei der Ausnehmung des Transportbands auch um wenigstens einen in Längsrichtung des Transportbands verlaufenden Schlitz handeln. Die PflückerInnen stecken die Pilze mit den Stielen nach unten einzelnen in den Schlitz ein. Der Schlitz sollte so ausgebildet sein, dass er eine Breite aufweist, die kleiner ist als der minimale Pilzkopfdurchmesser und größer als der maximale Stieldurchmesser, so dass die Pilze mit dem Rand des Pilzkopfes jeweils seitlich neben dem Schlitz auf dem Transportband aufliegen. Der Schlitz erstreckt sich vorteilhafterweise als durchgehender Schlitz entlang des gesamten Transportbandes. Dies bietet den Vorteil, dass die Pilze beliebig nebeneinander auf dem Band abgelegt werden können. Zur Bildung des Schlitzes kann das Transportband zwei bandförmige, parallel und voneinander beabstandete Elemente aufweisen, die sich in Längsrichtung des Transportband erstrecken. Idealerweise bestehen die Elemente aus einem flexiblen/elastischen Material. Durch diese Ausgestaltung wird ermöglicht, dass Pilze unterschiedlicher Größe transportiert werden können. Weisen die Pilze einen besonderes dicken Stiel auf, dann gibt das Material nach und der Schlitz weitet sich auf. Des Weiteren wird durch die Verformbarkeit erreicht, dass die Pilze beim Einführen in den Schlitz nicht beschädigt werden.

Grundsätzlich ist es auch denkbar, dass das Transportband eine Mehrzahl an Schlitzen aufweist. Die Schlitze können identisch sowie unterschiedlich lang und/oder breit ausgebildet sein. Die Schlitze können ferner hintereinander bzw. in Reihe oder aber auch versetzt, vorteilhafterweise parallel zueinander, angeordnet sein. Denkbar ist weiter, dass die Schlitze einzelnen Pflückplätzen zugeordnet sind. Unter Pflückplatz ist ein Ort zu verstehen, an dem die Pilze vom Beet gepflückt werden, an dem sich also eine Person befindet. Dies bietet den Vorteil, dass das Transportband auch noch für die hinteren Pflückplätze leere Schlitze aufweist, in die die PflückerInnen die gepflückten Pilze einstecken können. Mit hinteren Pflückplätzen sind erfindungsgemäß diejenigen Plätze gemeint, die das Transportband erst erreicht, nachdem es bereits andere Pflückplätze passiert hat.

Vorteilhafterweise weist die Vorrichtung zwei Transportbänder auf. Die Transportbänder erstrecken sich dabei auf sich gegenüberliegenden Seiten des Gestells und erstrecken sich bevorzugt entlang der gesamten Längserstreckung des Pflückgestells. Auf diese Weise können PflückerInnen auf beiden Seiten des Pflückgestells arbeiten.

Weitere vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass die Abwurfeinrichtung einen Löffel oder eine Rampe umfasst, der bzw. die in Förderrichtung unter dem Transportband angeordnet ist, wobei der Löffel bzw. die Rampe dazu ausgebildet ist, jeweils am Stiel der aufgenommenen Pilze anzugreifen und die Pilze bei der Förderbewegung nacheinander aus der Ausnehmung zu schieben. Mit dem Löffel oder mit der Rampe ist eine einfache Möglichkeit gegeben, die aufgenommen Pilze am Stiel aus der Ausnehmung herauszuschieben. Hierzu ist der Löffel oder die Rampe vorteilhafterweise schräg zur Förderrichtung unter dem Transportband angeordnet. Über die Schräge des Löffels oder der Rampe kann die Förderbewegung der aufgenommenen Pilze sehr einfach in eine Abwurfbewegung umgesetzt werden.

Besonders bevorzugt ist eine Ausführungsform, die vorsieht, dass die Abwurfeinrichtung als ein Umlenkrad ausgebildet ist, das das Transportband führt, wobei das Umlenkrad dazu ausgebildet ist, jeweils am Stiel der aufgenommenen Pilze anzugreifen und die Pilze bei der Förderbewegung nacheinander aus der Ausnehmung zu schieben. Das am Transportband rotierende Umlenkrad kann einfach über die Abrollbewegung des Umlenkrads zum Transportband die aufgenommenen Pilze am Stiel aus der Ausnehmung schieben. Hierzu verfügt das Umlenkrad vorteilhafterweise über ein Profil, mit dem die Pilzstiele von dem Umlenkrad für die Abwurfbewegung erfasst werden können. Das Profil greift in diesem Fall vorzugsweise unter die Stiele der auf dem Transportband aufgenommenen Pilze und schiebt die Pilze dadurch in der Abwurfbewegung nacheinander aus der Ausnehmung, während die Pilze in der Förderbewegung vom Transportband bewegt werden.

Eine besonders vorteilhafte Ausführung der Erfindung sieht vor, dass die Abwurfeinrichtung weiter dazu ausgebildet ist, die aus der Ausnehmung heraus bewegten Pilze in ein Behältnis unter dem Transportband fallen zu lassen. Dadurch, dass die aus der Ausnehmung heraus bewegten Pilze einfach in ein unter der Abwurfstelle platziertes Behältnis unter Schwerkrafteinwirkung fallen, können die Pilze besonders einfach in dem bereitstehenden Behältnis abgelegt und anschließend verkaufsfertig verpackt werden. Über die Abwurfeinrichtung können so sehr einfach die unter der Abwurfstelle bereitstehenden Behältnisse mit geernteten Pilzen befüllt werden. Dies erfolgt vorteilhafterweise durch Schwerkrafteinwirkung, wodurch die Pilze von dem Transportband in die Behältnisse fallen.

Eine vorteilhafte Ausführung der Erfindung sieht vor, dass die Abwurfeinrichtung wenigstens eine Rutsche umfasst, über welche die aus der Ausnehmung heraus bewegten Pilze unter Schwerkraftwirkung in ein Behältnis rutschen. Über die Rutsche können die Pilze so gezielt gelenkt werden, so dass sie von dem Transportband zuverlässig in ein bereitstehendes Behältnis gelangen. An der Rutsche kann auch eine Lichtschranke vorgesehen sein. Diese Lichtschranke ist dazu eingerichtet, die einzelnen Pilze zu erfassen, sodass diese gezählt werden können. In Kombination mit einer Waage, welche die im Behältnis befindlichen Pilze wiegt, kann über die Anzahl der Pilze ein Durchschnittsgewicht der einzelnen Pilze im Behältnis einfach bestimmt werden.

Besonders vorteilhaft ist eine Ausführungsform, die vorsieht, dass die Rutsche eine Rückhaltevorrichtung aufweist, um die Pilze beim Wechsel des Behältnisses auf der Rutsche zurückzuhalten. Mit einer Rückhaltevorrichtung, die bevorzugt als einfacher Schieber ausgebildet ist, können die Pilze auf der Rutsche zurückgehalten werden, bis ein volles Behältnis unter der Abwurfstelle entfernt wurde und ein nächstes, leeres Behältnis für die zurückgehaltenen Pilze unter der Abwurfstelle bereitgestellt wurde. Alternativ zu der Rückhaltevorrichtung kann zum Wechsel der Behältnisse unter der Abwurfstelle das Transportband jeweils kurz angehalten werden.

Eine vorteilhafte Ausgestaltung sieht vor, dass die Behältnisse jeweils auf wenigstens einer Waage der Vorrichtung stehen, wobei die Waage dazu ausgelegt ist, das jeweilige Gewicht der einzelnen Behältnisse zu erfassen. Über die Bestimmung des Gewichts der Behältnisse können Rückschlüsse über den Füllgrad gezogen werden. Auf diese Weise kann über die Waage erkannt werden, ob ein Behältnis unter der Abwurfstelle der Abwurfeinrichtung bereits ausreichend gefüllt ist und wann ein Wechsel zum nächsten, leeren Behältnis zu erfolgen hat.

Gemäß einer bevorzugten Ausgestaltung der Erfindung ist vorgesehen, dass die Waage dazu ausgebildet ist, ein Signal an die Rückhaltevorrichtung zu geben, um die Pilze auf der Rutsche zurückzuhalten, wenn ein Sollgewicht an Pilzen in einem Behältnis auf der Waage erreicht wurde.

Besonders vorteilhaft ist eine Ausführungsform, die vorsieht, dass eine Behältnisfördereinrichtung vorgesehen ist, die dazu eingerichtet ist, einen Wechsel der Behältnisse durch Abtransport von mit Pilzen befüllten Behältnissen und durch Anlieferung leerer Behältnisse automatisch zu vollziehen. Über den automatisierten Wechsel der Behältnisse durch Abtransport von mit Pilzen befüllten Behältnissen und durch Anlieferung leerer Behältnisse können die Behältnisse automatisch nacheinander mit Pilzen befüllt werden. Zur Zuführung der Behältnisse kann die Behältnisfördereinrichtung einen oder mehrere Schalenabstapler an sich bekannter Art aufweisen. Der Abtransport voller Behältnisse wird vorzugsweise durch die Behältnisfördereinrichtung realisiert, welche die Behältnisse z.B. zu einer Sammelstation fördert.

Eine besonders vorteilhafte Ausführung der Erfindung sieht vor, dass die Behältnisfördereinrichtung dazu eingerichtet ist, die Behältnisse jeweils bei Erfassung eines einem Bruchteil eines Sollgewichts entsprechenden Gewichts auf der Waage stückweise weiter zu bewegen, um eine gleichmäßig Füllung der Behältnisse zu gewährleisten. Die stückweise Bewegung der Behältnisse auf der Waage bewirkt, dass die Behältnisse relativ zur Abwurfstelle so positioniert werden, dass ein Befüllen der Behältnisse an mehreren nacheinander auf der Waage eingenommenen Positionen erfolgt. Über den Positionswechsel kann sehr einfach eine gleichmäßige Befüllung der Behältnisse auf der Waage gewährleistet werden.

Besonders vorteilhaft ist eine Ausführungsform, die vorsieht, dass die Abwurfeinrichtung wenigstens ein Siebband umfasst, auf welches die aus der Ausnehmung heraus bewegten Pilze unter Schwerkraftwirkung auftreffen, wobei das Siebband dazu ausgebildet ist, dass anhaftendes Substrat von den auftreffenden Pilzen abgetrennt wird und durch das Siebband fällt, während die Pilze frei vom abgetrennten Substrat von dem Siebband weiter gefördert in ein Behältnis fallen. Mit diesem Siebband lassen sich die Pilze sehr leicht automatisiert von anhaftendem Substrat befreien. Das Substrat fällt von den auf das Siebband auftreffenden Pilzen ab und durch das Siebband durch und kann unter dem Siebband in einer Auffangwanne gesammelt werden.

Eine vorteilhafte Ausführung der Erfindung sieht vor, dass die Abwurfeinrichtung wenigstens eine Rutsche umfasst, über welche die aus der Ausnehmung heraus bewegten Pilze unter Schwerkraftwirkung auf das Siebband rutschen. Über die Rutsche können die Pilze so gezielt gelenkt werden, sodass sie von dem Transportband sicher auf das Siebband gelangen.

Durch die markierten Ausnehmungen können die PflückerInnen die Pilze abhängig von der Qualität den Ausnehmungen auf dem Transportband zuordnen. So kann bei der Ernte unmittelbar eine Qualitätssortierung durch die PflückerInnen vorgenommen werden. Es lassen sich über die markierten Ausnehmungen beispielsweise Pilze der Qualität "Dritte Wahl" aussortieren. Im Ergebnis werden an der Abwurfeinrichtung jeweils nur Pilze besserer Qualität an der Abwurfstelle in Behältnisse befördert.

Besonders vorteilhaft ist eine Ausführungsform, die vorsieht, dass wenigstens eine Auswurfeinrichtung der Vorrichtung dazu eingerichtet ist, die von dem Substrat geernteten Pilze aus den markierten Ausnehmungen heraus zu bewegen und in ein separates Sammelbehältnis zu befördern. Mit der automatischen Beförderung der von dem Substrat geernteten Pilze aus den markierten Ausnehmungen in das separate Sammelbehältnis können beispielsweise Pilze der "Dritten Wahl" abgesondert gesammelt werden und getrennt von Pilzen hochwertigerer Qualität verwertet werden.

Gemäß einer bevorzugten Ausgestaltung der Erfindung ist vorgesehen, dass die Auswurfeinrichtung als ein Hebel ausgebildet ist, wobei der Hebel dazu eingerichtet ist, in einer Greifstellung über das Transportband auszuschwenken und die von dem Substrat geernteten Pilze aus den markierten Ausnehmungen seitlich von dem Transportband auszuwerfen, indem der Hebel in eine Wurfstellung von dem Transportband weg zurück schwenkt. Der Hebel stellt eine besonders einfache Möglichkeit dar, die Pilze aus den markierten Ausnehmungen zu erfassen und seitlich von dem Transportband zu werfen, bevor Pilze hochwertigerer Qualität an der Abwurfstelle am Ende des Transportbandes in bereitgestellte Behältnisse befördert werden.

Eine besonders vorteilhafte Ausführung der Erfindung sieht vor, dass die Auswurfeinrichtung einen Sensor zur Erfassung von Farben umfasst, wobei die markierten Ausnehmungen auf dem Transportband farblich markiert sind, wobei der Sensor dazu eingerichtet ist, ein Signal auszugeben, um die Auswurfeinrichtung zu betätigen, wenn eine farblich markierte Ausnehmung erfasst wird. Im Ergebnis werden an der Abwurfeinrichtung Pilze in höherwertiger Qualität an der Abwurfstelle in Behältnisse befördert, während Pilze minderer Qualität aus den farblich markierten Ausnehmungen von der Auswurfeinrichtung in separate Sammelbehältnisse befördert werden.

Eine vorteilhafte Ausführung der Erfindung sieht vor, dass wenigstens zwei parallel zueinander verlaufende Transportbänder vorgesehen sind, um die von dem Substrat geernteten Pilzen nach Größen sortiert auf die wenigstens zwei Transportbänder aufgeteilt aufzunehmen, wobei jedem Transportband jeweils wenigstens eine Abwurfeinrichtung zugeordnet ist. Mit dem Einsatz von zwei parallel zueinander verlaufenden Transportbändern können die PflückerInnen die Pilze abhängig von der Größe den einzelnen Transportbändern zuordnen. So kann bei der Ernte unmittelbar eine Größensortierung durch die PflückerInnen vorgenommen werden. Im Ergebnis werden an den zugeordneten Abwurfeinrichtungen jeweils Pilze in unterschiedlichen Größen an den Abwurfstellen in unterschiedliche Behältnisse befördert.

Besonders vorteilhaft ist eine Ausführungsform, die vorsieht, dass wenigstens ein Transportband wenigstens zwei Reihen mit Ausnehmungen aufweist, um die von dem Substrat geernteten Pilzen nach Größen sortiert auf die wenigstens zwei Reihen aufgeteilt aufzunehmen, wobei dem Transportband wenigstens eine Abwurfeinrichtung zugeordnet ist. Durch die mindestens zwei Reihen können die PflückerInnen die Pilze abhängig von der Größe den einzelnen Reihen auf dem Transportband zuordnen. So kann bei der Ernte unmittelbar eine Größensortierung durch die PflückerInnen vorgenommen werden. Im Ergebnis werden an der Abwurfeinrichtung jeweils Pilze in unterschiedlichen Größen an den Abwurfstellen in unterschiedliche Behältnisse befördert.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäße Vorrichtung,
- Figur 2: Draufsicht auf eine erfindungsgemäße Vorrichtung,
- Figur 3: Ansicht auf Abwurfeinrichtung an erfindungsgemäßer Vorrichtung,
- Figur 4: Ansicht auf Löffel oder Rampe,
- Figur 5: Schnittansicht durch Löffel oder Rampe an Abwurfstelle,
- Figur 6: Schnittansicht an Umlenkrad,
- Figur 7: Schnittansicht an Löffel oder Rampe vor Umlenkrand an Abwurfstelle,
- Figur 8: Ansicht auf Abwurfeinrichtung mit Rutsche an erfindungsgemäßer Vorrichtung,
- Figur 9: Ansicht auf Waage unter Abwurfstelle,
- Figur 10: Ansicht auf eine erfindungsgemäße Vorrichtung,
- Figur 11: weitere Ansicht auf Abwurfeinrichtung mit Rutsche an erfindungsgemäßer Vorrichtung,
- Figur 12: weitere Ansicht auf eine Abwurfeinrichtung an einer weiteren erfindungsgemäßen Vorrichtung,
- Figur 13: Ansicht auf Abwurfeinrichtung mit Rutsche,
- Figur 14: Ansicht auf Siebbänder,
- Figur 15: Ansicht auf Auswurfeinrichtung an erfindungsgemäßer Vorrichtung,
- Figur 16: Ansicht auf Auswurfeinrichtung in Greifstellung,
- Figur 17: Ansicht auf Auswurfeinrichtung in Wurfstellung,
- Figur 18: Ansicht auf Auswurfeinrichtung von oben,
- Figur 19: Seitenansicht auf Abwurfeinrichtung, und
- Figur 20: weitere Seitenansicht auf Abwurfeinrichtung.

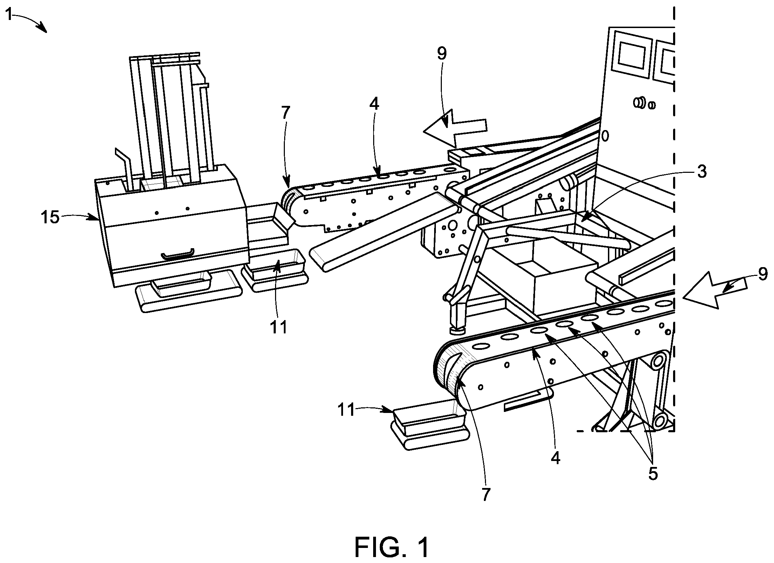

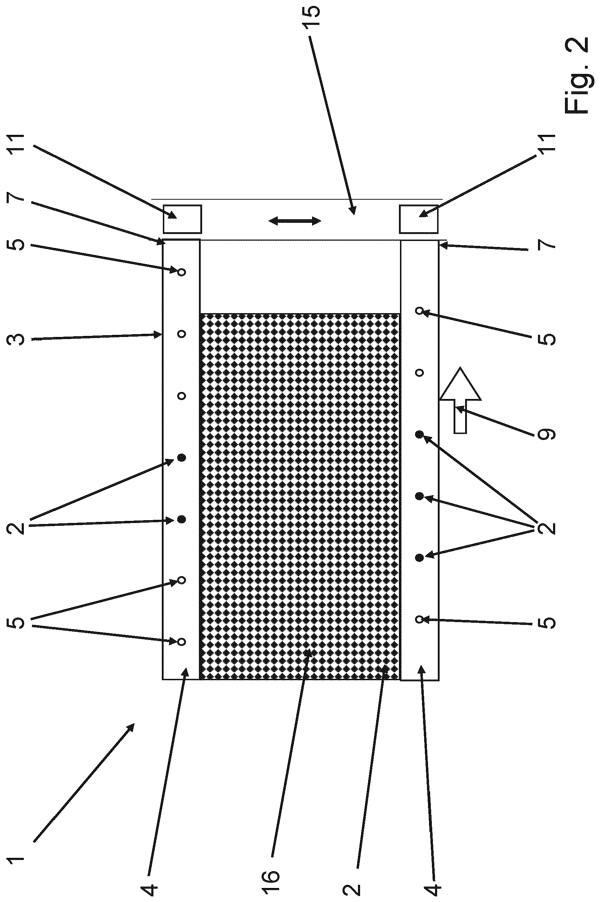

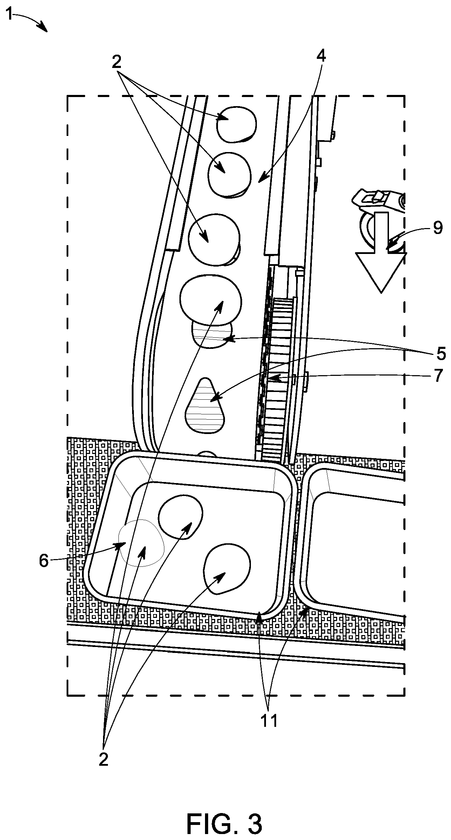

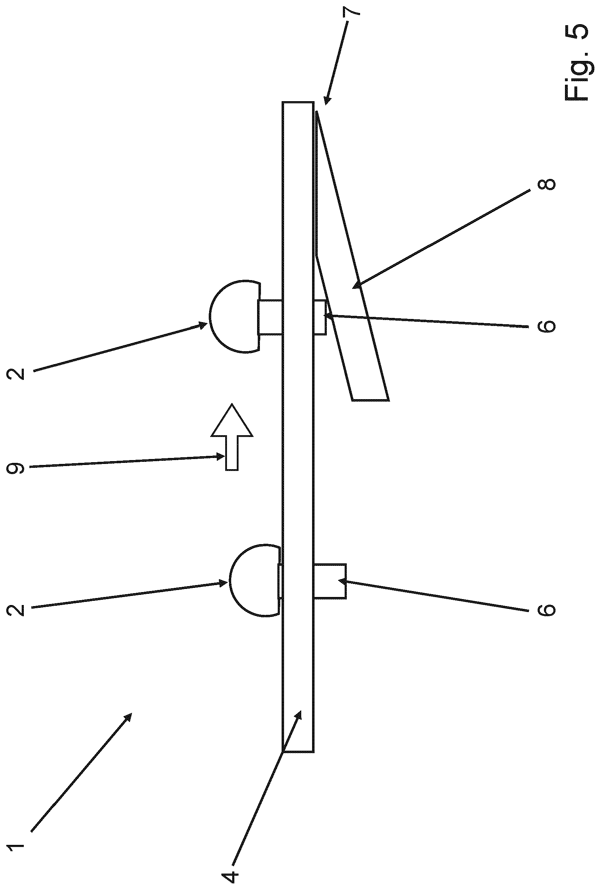

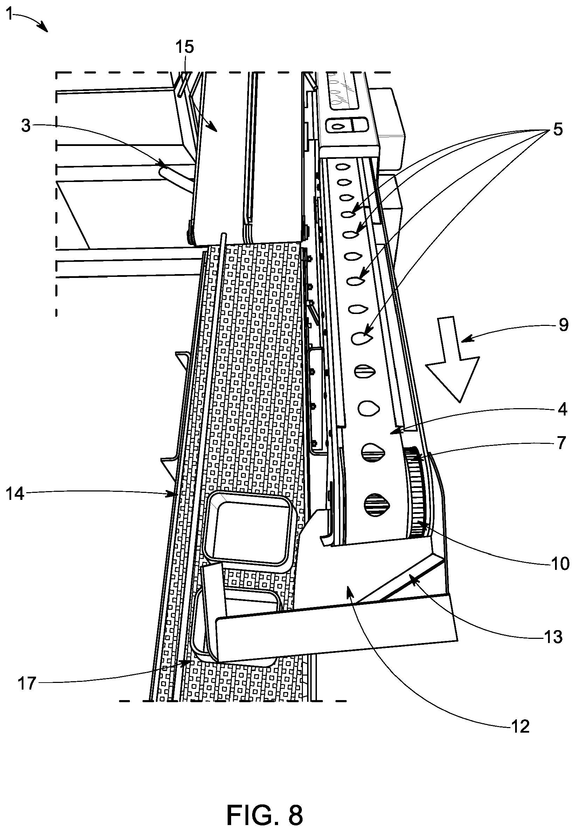

In der Figur 1 mit dem Bezugszeichen 1 bezeichnet ist eine erfindungsgemäße Vorrichtung dargestellt. Die Vorrichtung 1 zur Kultivierung und Ernte von Pilzen 2 (Fig. 2) verfügt über ein Pflückgestell, wobei in Figur 2 beispielhaft ein solches Pflückgestell 3 von oben zu sehen ist. Die auf einem Substrat 16 (Fig. 2) wachsenden Pilze 2 (Fig. 3) sind auf dem Pflückgestell 3 in einer Ernteebene angeordnet. Entlang des Pflückgestells 3 (Fig. 2) erstrecken sich zwei Transportbänder 4. Diese Transportbänder 4 verfügen über Ausnehmungen 5, die in den Ausführungsbeispielen beispielhaft als hintereinander im Transportband 4 geformte Durchgangslöcher ausgebildet sind. Die Ausnehmungen 5 dienen zur Aufnahme der von dem Substrat 16 (Fig. 2) geernteten Pilze 2 (Fig. 3), was beispielsweise in Figur 3 gut zu erkennen ist. Die Transportbänder 4 sind dazu ausgelegt, die mit dem Stiel 6 (Fig. 5, 6 und 7) in der Ausnehmung 5 aufgenommenen Pilze 2 zu fördern. Erfindungsgemäß ist an der Vorrichtung 1 an einer Abwurfstelle der Transportbänder 4 eine Abwurfeinrichtung 7 angeordnet. Diese Abwurfeinrichtung 7 setzt die Förderbewegung der aufgenommenen Pilze 2 (Fig. 3) in eine Abwurfbewegung um. Hierzu bewegt die Abwurfeinrichtung 7 die Pilzstiele 6 aus der Ausnehmung 5 heraus, wonach die Pilze 2 unter Schwerkraftwirkung von dem Transportband 4 abgeworfen werden. Hierdurch ist eine besonders einfache, sichere und schnelle Ernte der Pilze 2 (Fig. 3) möglich. In Figur 1 ist weiter eine Behältnisfördereinrichtung 15 zu sehen, die dazu eingerichtet ist, einen Wechsel der Behältnisse 11 durch Abtransport von mit Pilzen 2 befüllten Behältnissen 11 und durch Anlieferung leerer Behältnisse 11 automatisch zu vollziehen. Hierzu umfasst die Behältnisfördereinrichtung 15 einen Schalenabstapler an sich bekannter Art. Der Abtransport der mit Pilzen 2 (Fig. 3) gefüllten Behältnisse 11 erfolgt über ein Förderband 15 (Fig. 8), welches die vollen Behältnisse 11 zu einer Sammelstation fördert.

In Figur 2 ist die Behältnisfördereinrichtung 15 schematisch als einfaches Förderband dargestellt, das die Behältnisse 11 unter den Abwurfstellen der Abwurfeinrichtungen 7 der beiden parallel zum Pflückgestell 3 verlaufenden Transportbändern 4 positioniert. Es können auch auf jeder Seite des Pflückgestells 3 wenigstens zwei parallel zueinander verlaufende Transportbänder 4 vorgesehen sein, um die von dem Substrat 16 geernteten Pilze 2 nach Größen sortiert auf die Transportbänder 4 aufgeteilt aufzunehmen, wobei jedem Transportband 4 jeweils wenigstens eine Abwurfeinrichtung 7 zugeordnet ist. Vorteilhafterweise erstrecken sich die Transportbänder 4 entlang der gesamten Länge des Pflückgestells 3. Dies bietet den Vorteil, dass die die Pilze 2 erntenden PflückerInnen überall auf beiden Seiten entlang des Pflückgestells 3 stehen können und die gepflückten Pilze 2 unmittelbar auf dem Transportband 4 ablegen können.

Die Figur 3 zeigt eine Ansicht auf eine Abwurfeinrichtung 7 an einer erfindungsgemäßen Vorrichtung 1, wie sie auch in Figur 1 gezeigt ist. Hier ist zu erkennen, dass die Abwurfeinrichtung 7 dazu ausgebildet ist, die aus der Ausnehmung 5 heraus bewegten Pilze 2 in ein Behältnis 11 unter dem Transportband 4 fallen zu lassen. In Figur 3 ist ein solches Behältnis 11 einfach an der Abwurfstelle unter dem Transportband 4 angeordnet, sodass die Pilze 2 unter Schwerkrafteinwirkung von dem Transportband 4 in die Behältnisse 11 fallen. Hierzu werden die in den Ausnehmungen 5 platzierten Pilze 2 in Förderrichtung 9 auf dem Transportband 4 bewegt. Die Abwurfeinrichtung 7 setzt die Förderbewegung der aufgenommenen Pilze in Förderrichtung 9 auf dem Transportband 4 in eine Abwurfbewegung um. Dazu bewegt die Abwurfeinrichtung 7 die Pilzstiele 6 aus der Ausnehmung 5 heraus. Dadurch werden die Pilze 2 unter Schwerkraftwirkung von dem Transportband 4 abgeworfen.

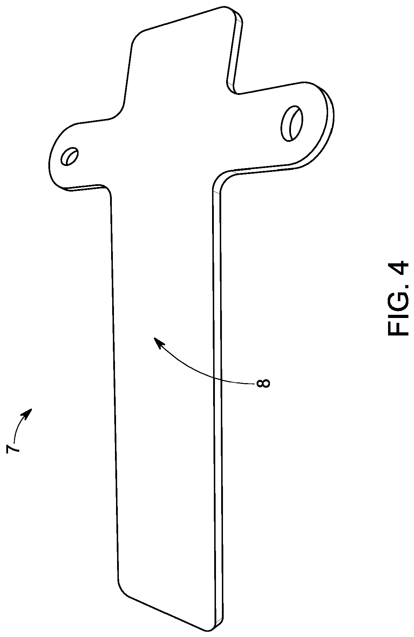

In Figur 4 ist eine Einzelansicht auf den Löffel oder die Rampe 8 gezeigt. Die so ausgestaltete Abwurfeinrichtung 7 kann einfach unter einem Transportband 4 der Vorrichtung 1 angeordnet sein.

Die Figur 5 zeigt eine schematische Schnittansicht durch einen entsprechenden Löffel oder eine entsprechende Rampe 8 an der Abwurfstelle unter einem Transportband 4 der Vorrichtung 1. Bei der hier gezeigten Ausführung ist die Abwurfeinrichtung 7 in Form eines Löffels oder einer Rampe 8 in Förderrichtung 9 schräg unter dem Transportband 4 angeordnet. Damit ist der Löffel bzw. die Rampe 8 so angeordnet, dass die jeweils am Stiel 6 aufgenommenen Pilze 2 an dem Stiel 6 von der Abwurfeinrichtung 7 aufgegriffen werden und die Pilze 2 bei der Förderbewegung nacheinander aus der Ausnehmung 5 geschoben werden. In der Ansicht ist zu sehen, dass der linke Pilz 2 mit seinem Stiel 6 noch vollständig in der Ausnehmung 5 des Transportbandes 4 aufgenommen ist, so wie er von den PflückerInnen auf dem Transportband 4 händisch abgelegt wurde. Der Rechte der Pilze 2 hingegen hat die Abwurfstelle des Transportbandes 4 durch die Förderbewegung in Förderrichtung 9 bereits erreicht. Der Löffel oder die Rampe 8 greift bereits an dem Stiel 6 des rechten Pilzes 2 an und schiebt diesen in einer Abwurfbewegung aus der Ausnehmung 5.

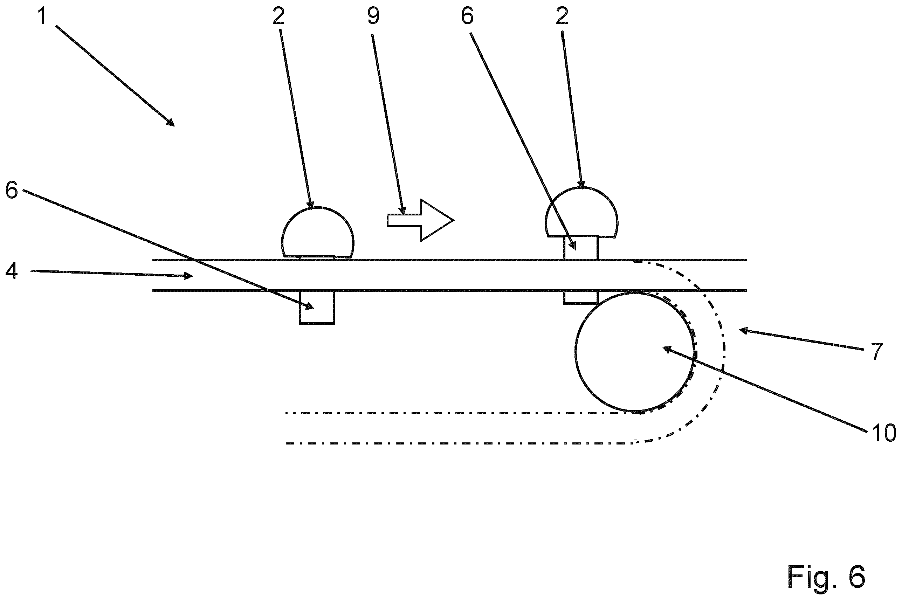

In Figur 6 ist eine schematische Schnittansicht durch eine als Umlenkrad 10 ausgebildete Abwurfeinrichtung 7 an der Abwurfstelle eines Transportbands 4 gezeigt. Das Umlenkrad 10 führt hier das Transportband 4. Das Umlenkrad 10 kann das Transportband 4 dabei umlenken, wie es strichpunktiert angedeutet ist. Das Umlenkrad 10 kann das Transportband 4 aber auch führen, indem das Umlenkrand 10 das Transportband 4 lediglich an der Unterseite abstützt. Das Umlenkrad 10 greift jeweils am Stiel 6 der aufgenommenen Pilze 2 an und schiebt die Pilze 2 bei der Förderbewegung nacheinander aus der Ausnehmung 5 heraus. In der Ansicht ist zu sehen, dass der linke Pilz 2 mit seinem Stiel 6 noch vollständig in der Ausnehmung 5 des Transportbandes 4 aufgenommen ist, so wie der Pilz 2 von den PflückerInnen auf dem Transportband 4 händisch abgelegt wurde. Der rechte Pilz 2 hingegen hat bereits durch die Förderbewegung in Förderrichtung 9 die Abwurfstelle des Transportbandes 4 erreicht. Das Umlenkrad 10 greift bei seiner Abrollbewegung am Transportband 4 bereits an dem Stiel 6 des rechten Pilzes 2 an und schiebt diesen in einer Abwurfbewegung aus der Ausnehmung 5 des Transportbands 4. Damit wird die Förderbewegung der aufgenommenen Pilze 2 in die Abwurfbewegung umgesetzt. Die Abwurfeinrichtung 7 bewegt die Pilzstiele 6 so aus der Ausnehmung 5 heraus, und die Pilze 2 fallen unter Schwerkraftwirkung von dem Transportband 4 herunter.

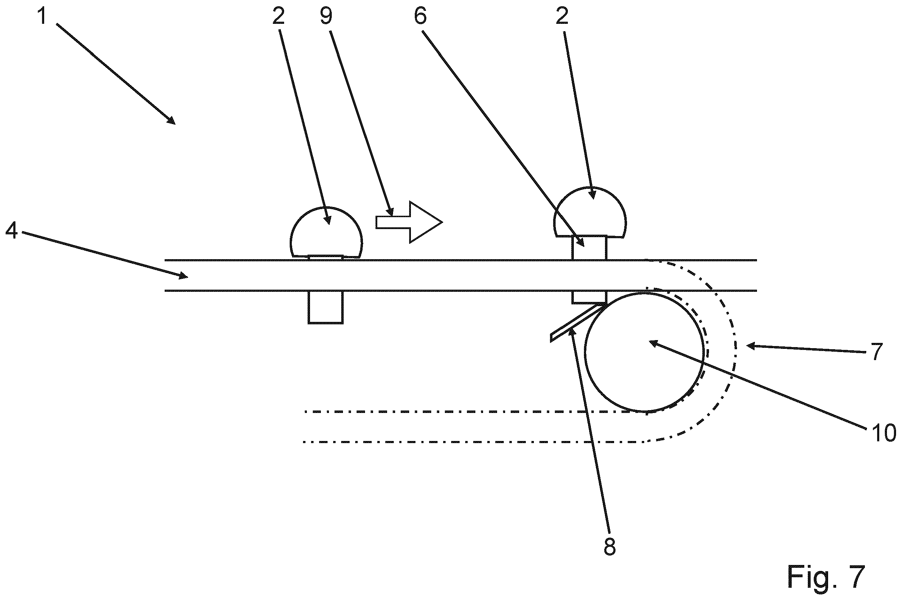

Die Figur 7 zeigt eine schematische Schnittansicht, wobei hinter dem Löffel oder der Rampe 8 noch zusätzlich ein Umlenkrand 10 an der Abwurfstelle vorgesehen ist. In dem hier gezeigten Ausführungsbeispiel umfasst die Abwurfeinrichtung 7 ein Umlenkrad 10 und einen Löffel oder eine Rampe 8. Das Umlenkrad 10 führt hier das Transportband 4. Das Umlenkrad 10 kann das Transportband 4 dabei umlenken, wie es strichpunktiert angedeutet ist. Das Umlenkrad kann 10 das Transportband aber auch führen, indem das Umlenkrand 10 das Transportband 4 lediglich an der Unterseite abstützt. Der Löffel bzw. die Rampe 8 ist in Förderrichtung 9 vor dem Umlenkrad 10 unter dem Transportband 4 angeordnet. Der Löffel bzw. die Rampe 8 dienen in diesem Fall dazu, die auf dem Transportband 4 aufgenommenen Pilze 2 jeweils am Stiel 6 anzugreifen und die Pilze 2 bei der Förderbewegung 9 teilweise aus der Ausnehmung 5 zu schieben. Das nachgeordnete Umlenkrad 10 dient hier dazu, die Pilze 2 anschließend vollständig aus der Ausnehmung 5 herauszuschieben. Damit bewegt die Abwurfeinrichtung 7 die Pilzstiele 6 aus der Ausnehmung 5 heraus und die Pilze 2 fallen unter Schwerkraftwirkung von dem Transportband 4 herunter. Auf diese Weise wird insbesondere verhindert, dass die Pilzstiele zwischen Transportband 4 und Umlenkrad 10 eingeklemmt werden.

Die Figur 8 zeigt eine Ansicht auf eine Abwurfeinrichtung 7 an einer erfindungsgemäßen Vorrichtung 1. In dem hier gezeigten Ausführungsbeispiel umfasst die Abwurfeinrichtung 7 auch eine Rutsche 12. Über diese Rutsche 12 können die aus den Ausnehmungen 5 herausbewegten Pilze 2 (Fig. 3) unter Schwerkrafteinwirkung in ein unter dem Ende der Rutsche 12 platziertes Behältnis 11 (Fig. 3) rutschen. Wie in Figur 8 zu erkennen ist, deckt die Abwurfeinrichtung 7 die Ausnehmungen 5 im Transportband 4 von der Unterseite her ab, sodass die aus den Ausnehmungen 5 herausbewegten Pilze 2 (Fig. 3) nicht in die Ausnehmungen 5 zurückfallen können, bevor diese vom Transportband 4 fallen.

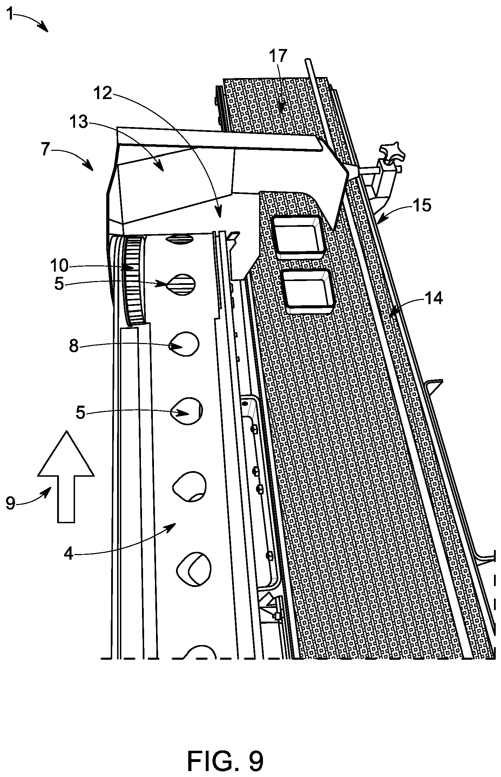

In Figur 9 ist die Abwurfeinrichtung 7 gemäß Figur 8 aus einer anderen Perspektive gezeigt. Die in Figur 8 und 9 nicht gezeigten Behältnisse 11 befinden sich unter dem Ende der Rutsche 12 auf einer Waage 14. Diese Waage 14 dient dazu, das Gewicht der abgestellten Behältnisse 11 (Fig. 1) zu erfassen. Mit der Bestimmung des Gewichts der Behältnisse 11 können Rückschlüsse über den Füllgrad gezogen werden. Dadurch kann mit der Waage 14 erkannt werden, ob ein Behältnis 11 (Fig. 3) unter der Abwurfstelle der Abwurfeinrichtung 7 bereits ausreichend gefüllt ist und ein Wechsel zu einem noch leeren Behältnis 11 (Fig. 3) erforderlich ist. Die Waage 14 kann ein Signal an die Rückhaltevorrichtung 13 auf der Rutsche 12 geben, sodass die Pilze 2 (Fig. 3) auf der Rutsche 12 zurückgehalten werden, wenn ein Sollgewicht an Pilzen 2 in einem Behältnis 11 (Fig. 3) auf der Waage 14 erreicht wurde. Die Waage 14 ist in dem gezeigten Ausführungsbeispiel in eine Behältnisfördereinrichtung 15 integriert. Diese Behältnisfördereinrichtung 15 ist dazu eingerichtet, die Behältnisse 11 (Fig. 1) jeweils bei Erfassung eines einem Bruchteil eines Sollgewichts entsprechenden Gewichts auf der Waage 14 stückweise weiter zu bewegen, um eine gleichmäßig Füllung der Behältnisse 11 zu gewährleisten. Hierzu ist die Waage 14 mit einem Förderband 17 versehen, das Teil der Behältnisfördereinrichtung 15 ist.

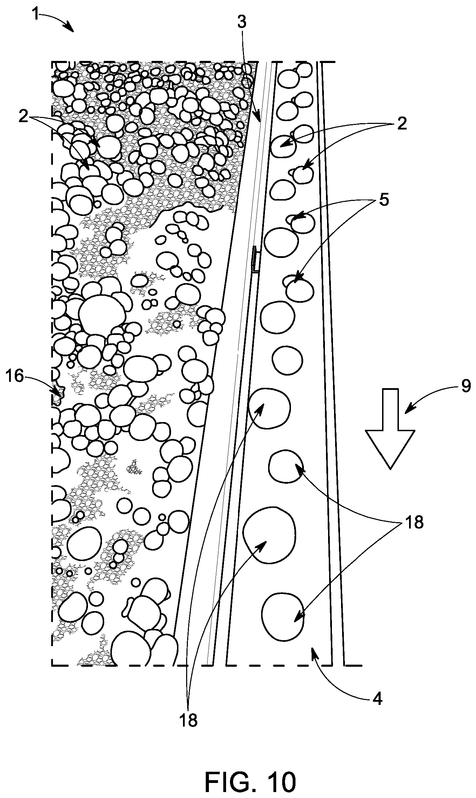

Die Figur 10 zeigt eine Vorrichtung 1 zur Kultivierung und Ernte von Pilzen 2. Hier ist das Pflückgestell 3 der Vorrichtung 1 zu sehen, wobei die auf dem Substrat 16 wachsenden Pilze 2 auf dem Pflückgestell 3 in einer Ernteebene angeordnet sind. Entlang des Pflückgestells 3 erstreckt sich ein Transportband 4, das Ausnehmungen 5 zur Aufnahme der von dem Substrat 16 geernteten Pilze 2 aufweist. Wie zu erkennen ist, werden die auf dem Transportband 4 aufgenommenen Pilze 2 mit dem Stiel in der Ausnehmung 5 in Förderrichtung 9 gefördert. Bei der hier gezeigten Ausführung weist das Transportband 4 wenigstens zwei Reihen 18 mit Ausnehmungen 5 auf, um die von dem Substrat 16 geernteten Pilzen 2 nach Größen sortiert auf die wenigstens zwei Reihen 18 aufgeteilt aufzunehmen. Über die zwei Reihen 18 mit Ausnehmungen 5 entlang der Erstreckung des Transportbandes 4 besteht für die PflückerInnen die Möglichkeit die Pilze 2 abhängig von der Größe den einzelnen Reihen 18 auf dem Transportband 4 zuordnen. Auf diese Weise kann bei der Ernte unmittelbar eine Größensortierung durch die PflückerInnen vorgenommen werden.

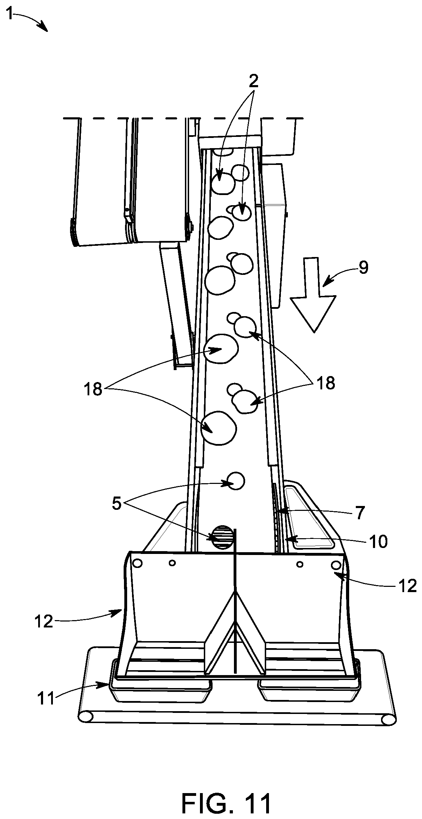

In Figur 11 ist eine Abwurfeinrichtung 7 mit Rutsche 12 am Ende des Transportbandes 4 gemäß Figur 10 gezeigt. Die Pilze 2 erreichen hier die Abwurfeinrichtung 7 nach Größen sortiert auf die wenigstens zwei Reihen 18 aufgeteilt. Über eine zweigeteilte Rutsche 12 an der Abwurfeinrichtung 7 werden die Pilze 2 mit unterschiedlichen Größen an den Abwurfstellen in unterschiedliche Behältnisse 11 befördert. Die Abwurfeinrichtung 7 setzt hierzu die Förderbewegung der aufgenommenen Pilze 2 in eine Abwurfbewegung um, wie bei den anderen Ausführungsbeispielen. Die Pilzstiele 6 werden so von der Abwurfeinrichtung 7 aus den Ausnehmungen 5 heraus bewegt, wonach die Pilze 2 unter Schwerkraftwirkung von dem Transportband 4 abgeworfen werden und von der Rutsche 12 aufgeteilt in unterschiedliche Behältnisse 11 fallen. An der Rutsche 12 können auch zwei Lichtschranken vorgesehen sein. Diese Lichtschranken sind dazu eingerichtet, die einzelnen Pilze 2 zu erfassen, sodass diese gezählt werden können. In Kombination mit zwei Waagen, welche die in den Behältnissen 11 befindlichen Pilze 2 wiegen, kann über die Anzahl der Pilze 2 ein Durchschnittsgewicht der einzelnen Pilze 2 in den Behältnissen 11 einfach bestimmt werden.

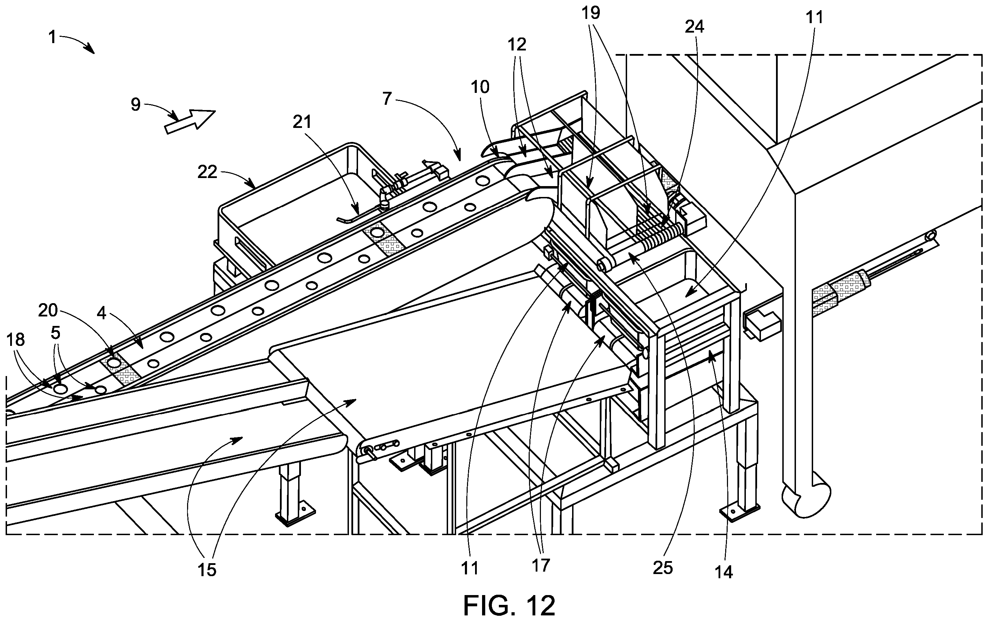

Die Figur 12 zeigt eine erfindungsgemäße Vorrichtung 1 zur Kultivierung und Ernte von Pilzen 2 (Fig. 2). Die Vorrichtung 1 verfügt über ein Pflückgestell, wobei in Figur 2 beispielhaft ein solches Pflückgestell 3 von oben zu sehen ist. Außerdem verfügt die Vorrichtung 1 über ein sich entlang des Pflückgestells 3 erstreckendes Transportband 4, das Ausnehmungen 5 zur Aufnahme der von dem Substrat 16 (Fig. 2) geernteten Pilzen 2 (Fig. 3) aufweist, Das Transportband 4 ist auch hier dazu ausgelegt, die mit dem Stiel 6 (Fig. 5, 6 und 7) in der Ausnehmung 5 aufgenommenen Pilze 2 zu fördern. Erfindungsgemäß ist an der Vorrichtung 1 an einer Abwurfstelle des Transportbandes 4 eine Abwurfeinrichtung 7 angeordnet. Diese Abwurfeinrichtung 7 setzt die Förderbewegung der aufgenommenen Pilze 2 (Fig. 3) in eine Abwurfbewegung um. Hierzu bewegt die Abwurfeinrichtung 7 die Pilzstiele 6 (Fig. 5) aus der Ausnehmung 5 heraus, wonach die Pilze 2 (Fig. 3) unter Schwerkraftwirkung von dem Transportband 4 abgeworfen werden. Damit kann eine einfache, sichere und schnelle Ernte der Pilze 2 (Fig. 3) erreicht werden. In Figur 12 ist außerdem eine Behältnisfördereinrichtung 15 zu sehen, die dazu eingerichtet ist, einen Wechsel der Behältnisse 11 durch Abtransport von mit Pilzen 2 befüllten Behältnissen 11 und durch Anlieferung leerer Behältnisse 11 automatisch zu vollziehen. Hierzu umfasst die Behältnisfördereinrichtung 15 einen Schalenabstapler an sich bekannter Art. Der Abtransport der mit Pilzen 2 (Fig. 3) gefüllten Behältnisse 11 erfolgt über ein Förderband 15, welches die vollen Behältnisse 11 zu einer Sammelstation fördert.

Im Unterschied zu den bisherigen Ausführungen sind nun zusätzlich Siebbänder 19 vorgesehen, auf welche die aus den Ausnehmungen 5 heraus bewegten Pilze 2 unter Schwerkraftwirkung auftreffen, wobei die Siebbänder 19 dazu ausgebildet sind, dass anhaftendes Substrat von den auftreffenden Pilzen 2 abgetrennt wird und durch die Siebbänder 19 fällt, während die Pilze 2 frei vom abgetrennten Substrat von den Siebbändern 19 weiter gefördert in Behältnisse 11 fallen. So können die Pilze sehr leicht automatisiert von anhaftendem Substrat befreit werden, denn das Substrat fällt von den auf die Siebbänder 19 auftreffenden Pilzen ab und durch die Siebbänder 19 durch und kann unter den Siebbändern 19 beispielsweise in einer Auffangwanne gesammelt werden.

Erfindungsgemäß sind auf dem Transportband 4 markierte Ausnehmungen 20 vorgesehen, um die von dem Substrat geernteten Pilze nach Qualität sortiert in den markierten Ausnehmungen 20 und den regulären Ausnehmungen zuzuordnen. Ferner ist eine Auswurfeinrichtung 21 zu erkennen, die von dem Substrat geerntete Pilze 2 aus den markierten Ausnehmungen 20 herausbewegen kann und die in den markierten Ausnehmungen 20 abgesonderten Pilze in ein separates Sammelbehältnis 22 befördert. Wie in Figur 12 zu sehen ist, wird bevorzugt jede fünfte Ausnehmung 20 einer Reihe 18 auf dem Transportband 4 markiert.

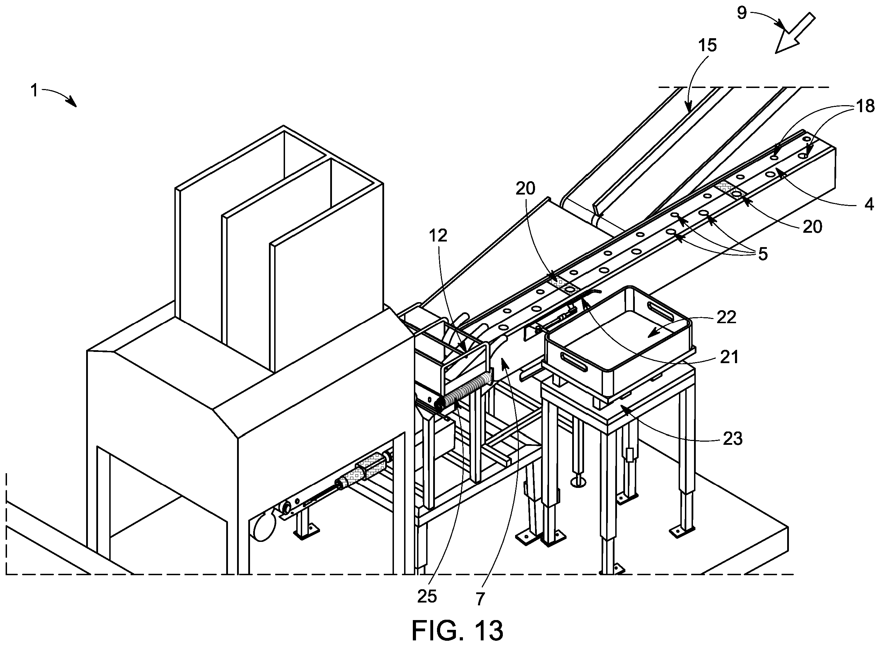

In Figur 13 ist eine weitere Ansicht auf die Abwurfeinrichtung 7 gemäß Figur 12 gezeigt. Das separate Sammelbehältnis 22, in welches die Auswurfeinrichtung 21 die in den markierten Ausnehmungen 20 abgesonderten Pilze befördert, steht seitlich neben dem Transportband 4 auf einem Abstelltisch 23. Außerdem ist zu erkennen, dass die Abwurfeinrichtung 7 zwei Rutschen 12 umfasst, über welche die von der Abwurfeinrichtung 7 aus der Ausnehmung 5 heraus bewegten Pilze 2 unter Schwerkraftwirkung auf die Siebbänder 19 rutschen.

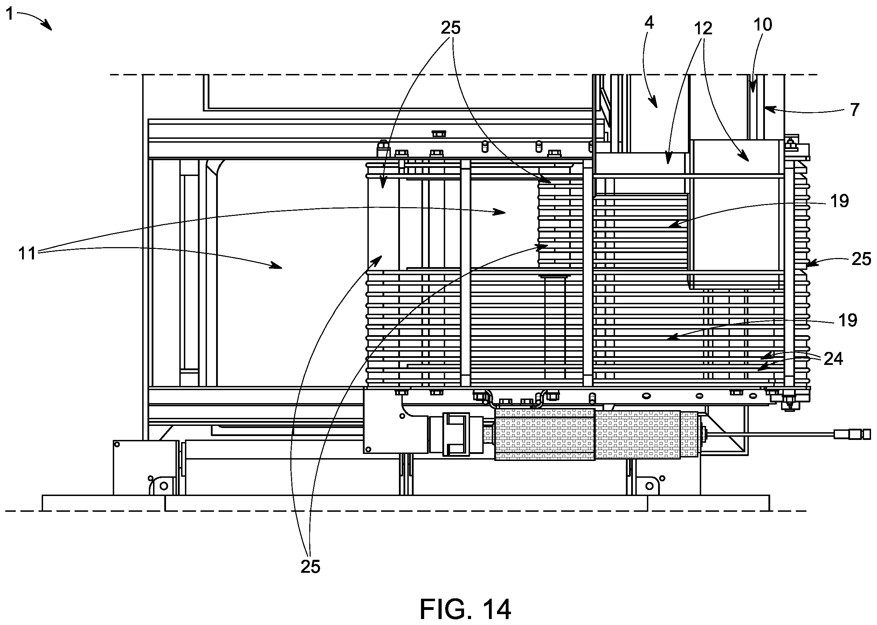

Die Figur 14 zeigt eine Ansicht von oben auf die Siebbänder 19, auf welche die nach Größen sortierten und auf zwei Reihen 18 (Fig. 12) aufgeteilten Pilze vom Transportband 4 abgeworfen werden. Über eine zweigeteilte Rutsche 12 an der Abwurfeinrichtung 7 treffen die Pilze 2 mit unterschiedlichen Größen dann auf unterschiedliche Siebbänder 19 auf und werden nach der Abtrennung von anhaftendem Substrat in unterschiedliche Behältnisse 11 befördert. In dieser Darstellung ist zu erkennen, dass die Siebbänder 19 durch im Querschnitt runde Bänder 24, bevorzugt aus Gummi, gebildet sind, die auf Umlenkwellen 25 beabstandet geführt Endlosförderbänder eines Siebbandes 19 bilden. Die Rutschen 12 und Siebbänder 19 sind unterschiedlich lang, damit zum einen die Pilze aus den zwei Reihen 18 auf den zwei quer zur Förderrichtung 9 orientierten Siebbändern, welche nebeneinander angeordnet sind, auftreffen können. Zum anderen sind die Siebbänder 19 unterschiedlich lang damit zwei in Förderrichtung 9 nebeneinander angeordnete Behältnisse 11 über die Siebbänder 19 befüllt werden können.

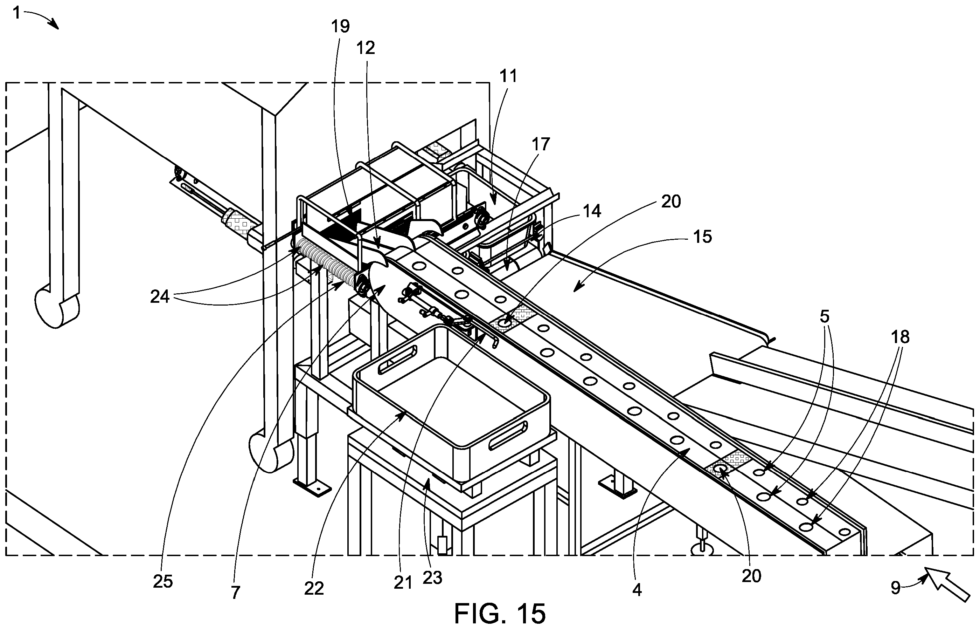

Wie aus Figur 15, aber auch bereits aus Figur 12, ersichtlich ist, werden die Behältnisse 11 unter den Siebbändern 19 über eine Behältnisfördereinrichtung 15 bereitgestellt, die dazu eingerichtet ist, einen Wechsel der Behältnisse 11 durch Abtransport von mit Pilzen 2 befüllten Behältnissen 11 und durch Anlieferung leerer Behältnisse 11 automatisch zu vollziehen. Die Behältnisse 11 befinden sich unter dem Ende der Siebbänder 19 auf einer Waage 14. Diese Waage 14 dient dazu, das Gewicht der abgestellten Behältnisse 11 zu erfassen. Mit der Bestimmung des Gewichts der Behältnisse 11 können Rückschlüsse über den Füllgrad gezogen werden. Dadurch kann mit der Waage 14 erkannt werden, ob ein Behältnis 11 unter der Abwurfstelle der Abwurfeinrichtung 7 bereits ausreichend gefüllt ist und ein Wechsel zu einem noch leeren Behältnis 11 erforderlich ist. Die Waage 14 kann ein Signal an eine Rückhaltevorrichtung 13 auf der Rutsche 12 geben, sodass die Pilze 2 auf der Rutsche 12 zurückgehalten werden oder die Waage 14 kann ein Signal an eine Steuerung der Siebbänder 19 geben, sodass diese (kurz) angehalten werden, wenn ein Sollgewicht an Pilzen 2 in einem Behältnis 11 auf der Waage 14 erreicht wurde. Die Waage 14 ist in dem gezeigten Ausführungsbeispiel in eine Behältnisförder¬einrichtung 15 integriert. Diese Behältnisfördereinrichtung 15 ist vorzugsweise dazu eingerichtet, die Behältnisse 11 jeweils bei Erfassung eines einem Bruchteil eines Sollgewichts entsprechenden Gewichts auf der Waage 14 stückweise weiter zu bewegen, um eine gleichmäßige Füllung der Behältnisse 11 zu gewährleisten. Hierzu ist die Waage 14 mit einem Förderband 17 versehen, das Teil der Behältnisfördereinrichtung 15 ist.

Im Folgenden soll ausführlicher auf die Auswurfeinrichtung 21 eingegangen werden, die von dem Substrat geerntete Pilze 2 (Fig. 3) aus den markierten Ausnehmungen 20 herausbewegen kann und die in den markierten Ausnehmungen 20 abgesonderten Pilze 2 (Fig. 3) in ein separates Sammelbehältnis 22 befördert. Das separate Sammelbehältnis 22 steht seitlich neben dem Transportband 4 auf dem Abstelltisch 24, sodass die Auswurfeinrichtung 21 die in den markierten Ausnehmungen 20 abgesonderten Pilze 2 (Fig. 3) in das Sammelbehältnis 22 befördern kann. Zur manuellen Absonderung der Pilze 2 (Fig. 3) durch die PflückerInnen verfügt das Transportband 4 über markierte Ausnehmungen 20, um die von dem Substrat geernteten Pilze 2 nach Qualität sortiert in den markierten Ausnehmungen 20 aufzunehmen. So lässt sich auf einfache Weise neben den zwei Reihen 18 auf dem Transportband 4 auch eine dritte Qualitätsstufe absondern. Die Auswurfeinrichtung 21 bewegt die von dem Substrat geernteten und abgesonderten Pilze aus den markierten Ausnehmungen 20 heraus in das separate Sammelbehältnis 22. Hierzu ist die Auswurfeinrichtung 21 vorteilhafterweise als ein Hebel ausgebildet.

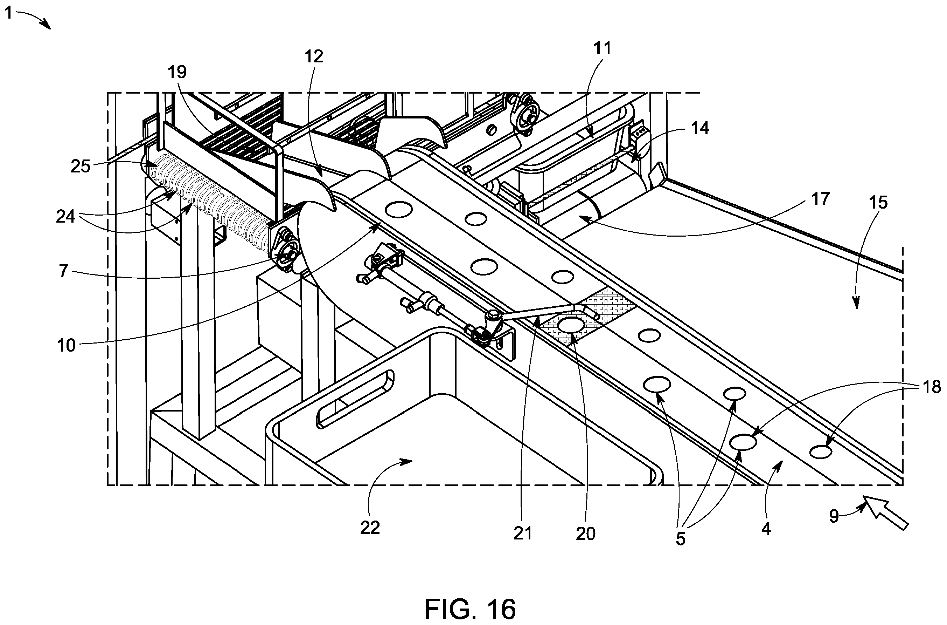

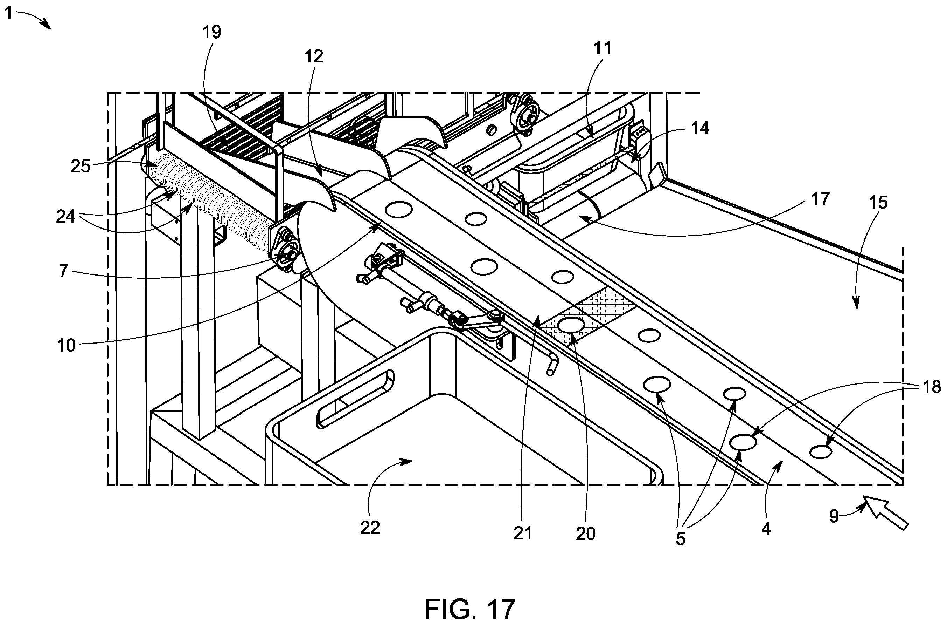

In Figur 16 ist zu erkennen, wie der Hebel 21 in eine Greifstellung über das Transportband 4 ausgeschwenkt ist. Um die von dem Substrat geernteten Pilze 2 (Fig. 3) aus den markierten Ausnehmungen 20 seitlich von dem Transportband 4 auszuwerfen, wird der Hebel in die in Figur 17 gezeigte Wurfstellung von dem Transportband 4 weg zurück geschwenkt.

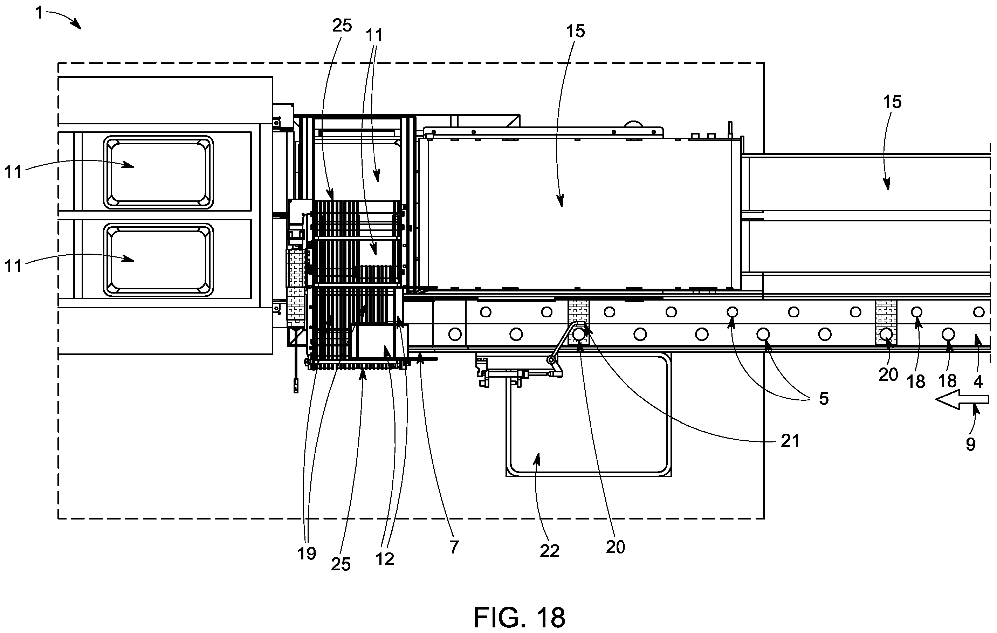

Die Figur 18 zeigt den Bereich um die Auswurfeinrichtung 21 von oben. Hier ist zu erkennen, dass der Hebel 21 rechtzeitig vor der markierten Ausnehmung in die gezeigte Greifstellung über das Transportband 4 ausschwenkt, um in den markierten Ausnehmungen 20 abgesonderte Pilze vom Transportband 4 herunter zu bewegen. Die Auswurfeinrichtung 21 verfügt vorteilhafterweise über einen Sensor zur Erfassung von Farben des Transportbandes 4, wobei die markierten Ausnehmungen 20 auf dem Transportband 4 farblich markiert sind. Der Sensor ist dazu eingerichtet, ein Signal auszugeben, um die Auswurfeinrichtung 21 zu betätigen, wenn eine farblich markierte Ausnehmung 20 erfasst wird, sodass der Hebel 21 in die Greifstellung verschwenkt und anschließend in die Auswurfstellung zurückgeschwenkt wird.

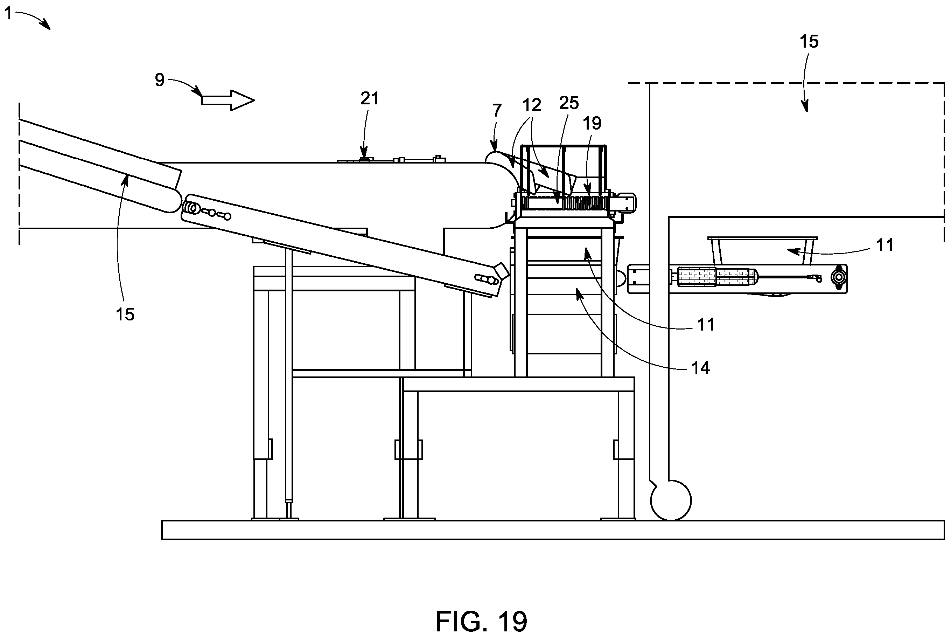

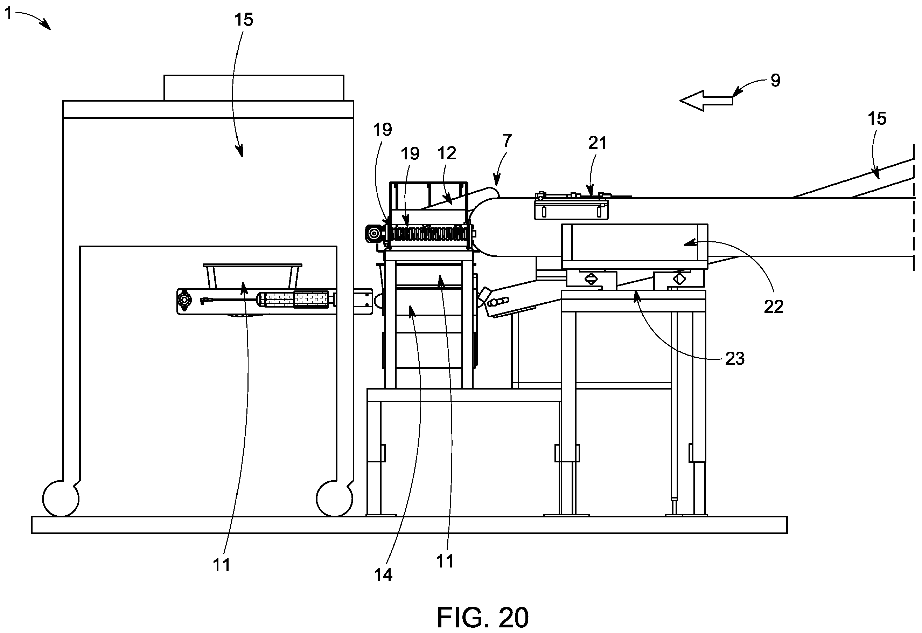

Die Seitenansichten der Figuren 19 und 20 zeigen, dass die an der Abwurfstelle des Transportbandes 4 angeordnete Abwurfeinrichtung 7, die Pilze 2 (Fig. 3) aus den beiden Reihen 18 unter Schwerkraftwirkung von dem Transportband 4 abwirft, wobei diese dann auf zwei Rutschen 12 getrennt auf die zwei Siebbänder 19 rutschen. Dabei fällt anhaftendes Substrat durch die Siebbänder 19 und die Pilze werden von hier aus in die bereitstehenden Behältnisse 11 unter den Siebbändern 19 befördert. Über die Behältnisfördereinrichtung 15 werden dann befüllte Behältnissen 11 automatisch abtransportiert und leere Behältnisse 11 automatisch bereitgestellt.

### Bezugszeichenliste

- 1: Vorrichtung
- 2: Pilze
- 3: Pflückgestell
- 4: Transportband
- 5: Ausnehmung
- 6: Stiel
- 7: Abwurfeinrichtung
- 8: Löffel oder Rampe
- 9: Förderrichtung
- 10: Umlenkrad
- 11: Behältnis
- 12: Rutsche
- 13: Rückhaltevorrichtung
- 14: Waage
- 15: Behältnisfördereinrichtung
- 16: Substrat
- 17: Förderband (Waage)
- 18: Reihen
- 19: Siebband
- 20: markierte Ausnehmung
- 21: Auswurfeinrichtung
- 22: Sammelbehältnis
- 23: Abstelltisch
- 24: Gummibänder
- 25: Umlenkwelle

## Patentansprüche

1. Vorrichtung (1) zur Kultivierung und Ernte von Pilzen (2), mit
- wenigstens einem Pflückgestell (3), wobei die auf einem Substrat wachsenden Pilze (2) auf dem Pflückgestell (3) in wenigstens einer Ernteebene angeordnet sind,
- wenigstens einem sich entlang des Pflückgestells (3) erstreckenden Transportband (4), das wenigstens eine Ausnehmung (5) zur Aufnahme der von dem Substrat geernteten Pilzen (2) aufweist, wobei das Transportband (4) dazu ausgelegt ist, die mit dem Stiel (6) in der Ausnehmung (5) aufgenommenen Pilze (2) zu fördern,
wobei eine an einer Abwurfstelle des Transportbandes (4) angeordneten Abwurfeinrichtung (7), die dazu ausgebildet ist, die Förderbewegung der aufgenommenen Pilze (2) in eine Abwurfbewegung umzusetzen, wobei die Abwurfeinrichtung (7) die Pilzstiele (6) aus der Ausnehmung (5) heraus bewegt, wonach die Pilze (2) unter Schwerkraftwirkung von dem Transportband (4) abgeworfen werden, **dadurch gekennzeichnet, dass**
wenigstens ein Transportband (4) markierte Ausnehmungen (20) aufweist, um die von dem Substrat geernteten Pilze (2) nach Qualität sortiert in den markierten Ausnehmungen (20) aufzunehmen.

2. Vorrichtung (1) nach Anspruch 1, **dadurch gekennzeichnet, dass** die Abwurfeinrichtung (7) einen Löffel (8) oder eine Rampe (8) umfasst, der bzw. die in Förderrichtung (9) unter dem Transportband (4) angeordnet ist, wobei der Löffel (8) bzw. die Rampe (8) dazu ausgebildet ist, jeweils am Stiel (6) der aufgenommenen Pilze (2) anzugreifen und die Pilze (2) bei der Förderbewegung nacheinander aus der Ausnehmung (5) zu schieben.

3. Vorrichtung (1) nach Anspruch 1, **dadurch gekennzeichnet, dass** die Abwurfeinrichtung (7) als ein Umlenkrad (10) ausgebildet ist, das das Transportband (4) führt, wobei das Umlenkrad (10) dazu ausgebildet ist, jeweils am Stiel (6) der aufgenommenen Pilze (2) anzugreifen und die Pilze (2) bei der Förderbewegung nacheinander aus der Ausnehmung (5) zu schieben.

4. Vorrichtung (1) nach Anspruch 1, **dadurch gekennzeichnet, dass** die Abwurfeinrichtung (7) ein Umlenkrad (10) und einen Löffel (8) oder eine Rampe (8) umfasst, wobei das Umlenkrad (10) das Transportband (4) führt, wobei der Löffel (8) bzw. die Rampe (8) vor dem Umlenkrad (10) unter dem Transportband (4) angeordnet ist, wobei der Löffel (8) bzw. die Rampe (8) dazu ausgebildet ist, jeweils am Stiel (6) der aufgenommenen Pilze (2) anzugreifen und die Pilze (2) bei der Förderbewegung (9) teilweise aus der Ausnehmung (5) zu schieben, wobei das Umlenkrad (10) dazu ausgebildet ist, die Pilze (2) vollständig aus der Ausnehmung (5) herauszuschieben.

5. Vorrichtung (1) nach einem der vorhergehenden Ansprüche, **dadurch gekennzeichnet, dass** die Abwurfeinrichtung (7) weiter dazu ausgebildet ist, die aus der Ausnehmung (5) heraus bewegten Pilze (2) in ein Behältnis (11) unter dem Transportband (4) fallen zu lassen.

6. Vorrichtung (1) nach einem der vorhergehenden Ansprüche, **dadurch gekennzeichnet, dass** die Abwurfeinrichtung (7) wenigstens eine Rutsche (12) umfasst, über welche die aus der Ausnehmung (5) heraus bewegten Pilze (2) unter Schwerkraftwirkung in ein Behältnis (11) rutschen.

7. Vorrichtung (1) nach Anspruch 6, **dadurch gekennzeichnet, dass** die Rutsche (11) eine Rückhaltevorrichtung (13) aufweist, um die Pilze (2) beim Wechsel des Behältnisses (11) auf der Rutsche (12) zurückzuhalten.

8. Vorrichtung (1) nach einem der vorhergehenden Ansprüche, **dadurch gekennzeichnet, dass** die Behältnisse (11) jeweils auf wenigstens einer Waage (14) der Vorrichtung (1) stehen, wobei die Waage (14) dazu ausgelegt ist, das Gewicht der Behältnisse (11) zu erfassen.

9. Vorrichtung (1) nach Anspruch 7 und 8, **dadurch gekennzeichnet, dass** die Waage (14) dazu ausgebildet ist, ein Signal an die Rückhaltevorrichtung (13) zu geben, um die Pilze (2) auf der Rutsche (12) zurückzuhalten, wenn ein Sollgewicht an Pilzen (2) in einem Behältnis (11) auf der Waage (14) erreicht wurde.

10. Vorrichtung (1) nach einem der vorhergehenden Ansprüche, **dadurch gekennzeichnet, dass** eine Behältnisfördereinrichtung (15) vorgesehen ist, die dazu eingerichtet ist, einen Wechsel der Behältnisse (11) durch Abtransport von mit Pilzen (2) befüllten Behältnissen (11) und durch Anlieferung leerer Behältnisse (11) automatisch zu vollziehen.

11. Vorrichtung (1) nach Anspruch 8 und 10, **dadurch gekennzeichnet, dass** die Behältnisfördereinrichtung (15) dazu eingerichtet ist, die Behältnisse (11) jeweils bei Erfassung eines einem Bruchteil eines Sollgewichts entsprechenden Gewichts auf der Waage (14) stückweise weiter zu bewegen, um eine gleichmäßig Füllung der Behältnisse (11) zu gewährleisten.

12. Vorrichtung (1) nach einem der vorhergehenden Ansprüche, **dadurch gekennzeichnet, dass** die Abwurfeinrichtung (7) wenigstens ein Siebband (19) umfasst, auf welches die aus der Ausnehmung (5) heraus bewegten Pilze (2) unter Schwerkraftwirkung auftreffen, wobei das Siebband (19) dazu ausgebildet ist, dass anhaftendes Substrat von den auftreffenden Pilzen (2) abgetrennt wird und durch das Siebband (19) fällt, während die Pilze (2) frei vom abgetrennten Substrat von dem Siebband (19) weiter gefördert in ein Behältnis (11) fallen.

13. Vorrichtung (1) nach Anspruch 12, **dadurch gekennzeichnet, dass** die Abwurfeinrichtung (7) wenigstens eine Rutsche (12) umfasst, über welche die aus der Ausnehmung (5) heraus bewegten Pilze (2) unter Schwerkraftwirkung auf das Siebband (19) rutschen.

14. Vorrichtung (1) nach einem der vorhergehenden Ansprüche, **dadurch gekennzeichnet, dass** wenigstens eine Auswurfeinrichtung (21) der Vorrichtung (1) dazu eingerichtet ist, die von dem Substrat geernteten Pilze (2) aus den markierten Ausnehmungen (20) heraus zu bewegen und in ein separates Sammelbehältnis (22) zu befördern.

15. Vorrichtung (1) nach Anspruch 14, **dadurch gekennzeichnet, dass** die Auswurfeinrichtung (21) als ein Hebel ausgebildet ist, wobei der Hebel (21) dazu eingerichtet ist, in einer Greifstellung über das Transportband (4) auszuschwenken und die von dem Substrat geernteten Pilze (2) aus den markierten Ausnehmungen (20) seitlich von dem Transportband (4) auszuwerfen, indem der Hebel (20) in eine Wurfstellung von dem Transportband (4) weg zurück schwenkt.

16. Vorrichtung (1) nach Anspruch 14 oder 15, **dadurch gekennzeichnet, dass** die Auswurfeinrichtung (21) einen Sensor zur Erfassung von Farben umfasst, wobei die markierten Ausnehmungen (20) auf dem Transportband (4) farblich markiert sind, wobei der Sensor dazu eingerichtet ist, ein Signal auszugeben, um die Auswurfeinrichtung (21) zu betätigen, wenn eine farblich markierte Ausnehmung (20) erfasst wird.

17. Vorrichtung (1) nach einem der vorhergehenden Ansprüche, **dadurch gekennzeichnet, dass** wenigstens zwei parallel zueinander verlaufende Transportbänder (4) vorgesehen sind, um die von dem Substrat geernteten Pilzen (2) nach Größen sortiert auf die wenigstens zwei Transportbänder (4) aufgeteilt aufzunehmen, wobei jedem Transportband (4) jeweils wenigstens eine Abwurfeinrichtung (7) zugeordnet ist.

18. Vorrichtung (1) nach einem der vorhergehenden Ansprüche, **dadurch gekennzeichnet, dass** wenigstens ein Transportband (4) wenigstens zwei Reihen (18) mit Ausnehmungen (5) aufweist, um die von dem Substrat geernteten Pilzen (2) nach Größen sortiert auf die wenigstens zwei Reihen (18) aufgeteilt aufzunehmen, wobei dem Transportband (4) wenigstens eine Abwurfeinrichtung (7) zugeordnet ist.

## Claims

1. Device (1) for cultivating and harvesting mushrooms (2), with
- at least one picking rack (3), wherein the mushrooms (2) growing on a substrate are arranged on the picking rack (3) in at least one harvesting plane,
- at least one conveyor belt (4) extending along the picking rack (3) and having at least one recess (5) for receiving the mushrooms (2) harvested from the substrate, wherein the conveyor belt (4) is designed to convey the mushrooms (2) with the stem (6) received in the recess (5),
wherein a dropping device (7) arranged at a dropping point of the conveyor belt (4) is designed to convert the conveying movement of the ingested mushrooms (2) into a dropping movement, wherein the dropping device (7) moves the mushroom stems (6) out of the recess (5), after which the mushrooms (2) are dropped from the conveyor belt (4) under the effect of gravity,
**characterized in that**
at least one conveyor belt (4) has marked recesses (20) for receiving the mushrooms (2) harvested from the substrate, sorted according to quality, in the marked recesses (20).

2. Device (1) according to claim 1, **characterized in that** the dropping device (7) comprises a spoon (8) or a ramp (8) which is arranged under the conveyor belt (4) in the conveying direction (9), wherein the spoon (8) or the ramp (8) is designed to engage in each case on the stem (6) of the ingested mushrooms (2) and to push the mushrooms (2) out of the recess (5) one after the other during the conveying movement.

3. Device (1) according to claim 1, **characterized in that** the dropping device (7) is designed as a deflection wheel (10) which guides the conveyor belt (4), wherein the deflection wheel (10) is designed to engage in each case on the stem (6) of the ingested mushrooms (2) and to push the mushrooms (2) out of the recess (5) one after the other during the conveying movement.

4. Device (1) according to claim 1, **characterized in that** the dropping device (7) comprises a deflection wheel (10) and a spoon (8) or a ramp (8), wherein the deflection wheel (10) guides the conveyor belt (4), wherein the spoon (8) or the ramp (8) is arranged in front of the deflection wheel (10) under the conveyor belt (4), wherein the spoon (8) or the ramp (8) is designed to engage in each case on the stem (6) of the ingested mushrooms (2) and to partially discharge the mushrooms (2) from the recess (5) during the conveying movement (9). wherein the deflection wheel (10) is designed to push the mushrooms (2) completely out of the recess (5).

5. Device (1) according to any one of the preceding claims, **characterized in that** the dropping device (7) is further designed to drop the mushrooms (2) moved out of the recess (5) into a container (11) under the conveyor belt (4).

6. Device (1) according to any one of the preceding claims, **characterized in that** the dropping device (7) comprises at least one chute (12), via which the mushrooms (2) moved out of the recess (5) slide into a container (11) under the effect of gravity.

7. Device (1) according to claim 6, **characterized in that** the chute (11) has a restraining device (13) to restrain the mushrooms (2) on the chute (12) when the container (11) is changed.

8. Device (1) according to any one of the preceding claims, **characterized in that** the containers (11) are each placed on at least one scale (14) of the device (1), wherein the scale (14) is designed to detect the weight of the containers (11).

9. Device (1) according to claim 7 and 8, **characterized in that** the scale (14) is designed to give a signal to the restraining device (13) to restrain the mushrooms (2) on the chute (12) when a target weight of mushrooms (2) in a container (11) on the scale (14) has been reached.

10. Device (1) according to any one of the preceding claims, **characterized in that** a container conveying device (15) is provided, which is set up to automatically carry out a change of the containers (11) by removing containers (11) filled with mushrooms (2) and by delivering empty containers (11).

11. Device (1) according to claims 8 and 10, **characterized in that** the container conveying device (15) is set up to move the containers (11) onwards in stages on the scale (14) when a weight corresponding to a fraction of a target weight is detected, in order to ensure uniform filling of the containers (11).

12. Device (1) according to any one of the preceding claims, **characterized in that** the dropping device (7) comprises at least one sieve belt (19), onto which the mushrooms (2) moving out of the recess (5) impinge under the effect of gravity, wherein the sieve belt (19) is designed so that adhering substrate is separated from the impinging mushrooms (2) and falls through the sieve belt (19), while the further conveyed mushrooms (2) fall from the sieve belt (19), free of the separated substrate, into a container (11).

13. Device (1) according to claim 12, **characterized in that** the dropping device (7) comprises at least one chute (12) via which the mushrooms (2) moved out of the recess (5) slide onto the sieve belt (19) under the effect of gravity.

14. Device (1) according to any one of the preceding claims, **characterized in that** at least one ejection device (21) of the device (1) is set up to move the mushrooms (2) harvested from the substrate out of the marked recesses (20) and to convey them into a separate collecting container.

15. Device (1) according to claim 14, **characterized in that** the ejection device (21) is designed as a lever, wherein the lever (21) is set up to pivot out over the conveyor belt (4) in a gripping position and to eject the mushrooms (2) harvested from the substrate from the marked recesses (20) laterally from the conveyor belt (4) by the lever (20) pivoting back into a throwing position away from the conveyor belt (4).

16. Device (1) according to claim 14 or 15, **characterized in that** the ejection device (21) comprises a sensor for detecting colors, wherein the marked recesses (20) on the conveyor belt (4) are marked in color, wherein the sensor is arranged to output a signal to actuate the ejection device (21) when a color-marked recess (20) is detected.

17. Device (1) according to any one of the preceding claims, **characterized in that** at least two conveyor belts (4) running parallel to one another are provided in order to receive the mushrooms (2) harvested from the substrate sorted by size divided between the at least two conveyor belts (4), wherein at least one dropping device (7) is assigned to each conveyor belt (4).

18. Device (1) according to any one of the preceding claims, **characterized in that** at least one conveyor belt (4) has at least two rows (18) with recesses (5) for receiving the mushrooms (2) harvested from the substrate sorted by size divided between the at least two rows (18), wherein at least one dropping device (7) is associated with the conveyor belt (4).

## Revendications

1. Dispositif (1) de culture et de récolte des champignons (2) avec
- au moins un support de cueillette (3), dans lequel les champignons (2) poussant sur un substrat étant disposés sur le support de cueillette (3) dans au moins un plan de récolte,
- au moins une bande transporteuse (4) s'étendant le long du support de cueillette (3), qui présente au moins un évidement (5) destiné à recevoir les champignons (2) récoltés sur le substrat, dans lequel la bande transporteuse (4) étant conçue pour transporter les champignons (2) reçus dans l'évidement (5) avec le pied (6),
dans lequel un dispositif de largage (7) disposé à un endroit de largage de la bande transporteuse (4), qui est conçu pour convertir le mouvement de transport des champignons (2) reçus en un mouvement de largage, dans lequel le dispositif de largage (7) déplaçant les pieds de champignons (6) hors de l'évidement (5), après quoi les champignons (2) sont largués de la bande transporteuse (4) sous l'effet de la gravité,
**caractérisé en ce que**
au moins une bande transporteuse (4) présente des évidements marqués (20) pour recevoir les champignons (2) récoltés sur le substrat, triés par qualité, dans les évidements marqués (20).

2. Dispositif (1) selon la revendication 1, **caractérisé en ce que** le dispositif de largage (7) comprend une cuillère (8) ou une rampe (8) qui est disposée sous la bande transporteuse (4) dans la direction de transport (9), la cuillère (8) ou la rampe (8) étant conçue pour s'engager respectivement sur le pied (6) des champignons (2) reçus et pour pousser les champignons (2) hors de l'évidement (5) les uns après les autres lors du mouvement de transport.

3. Dispositif (1) selon la revendication 1, **caractérisé en ce que** le dispositif de largage (7) est réalisé sous la forme d'une roue de renvoi (10) qui guide la bande transporteuse (4), dans lequel la roue de renvoi (10) étant réalisée de manière à s'engager respectivement sur le pied (6) des champignons (2) reçus et pour pousser les champignons (2) les uns après les autres hors de l'évidement (5) lors du mouvement de transport.

4. Dispositif (1) selon la revendication 1, **caractérisé en ce que** le dispositif de largage (7) comprend une roue de renvoi (10) et une cuillère (8) ou une rampe (8), dans lequel la roue de renvoi (10) guide la bande transporteuse (4), dans lequel la cuillère (8) ou la rampe (8) est disposée devant la roue de renvoi (10) sous la bande transporteuse (4), dans lequel la cuillère (8) ou la rampe est conçue pour s'engager respectivement sur le pied (6) des champignons (2) reçus et pour pousser les champignons (2) partiellement hors de l'évidement (5) lors du mouvement de transport (9), dans la roue de renvoi (10) étant conçue pour pousser les champignons (2) complètement hors de l'évidement (5).

5. Dispositif (1) selon l'une des revendications précédentes, **caractérisé en ce que** le dispositif de largage (7) est en outre conçu pour faire tomber les champignons (2) déplacés hors de l'évidement (5) dans un récipient (11) situé sous la bande transporteuse (4).

6. Dispositif (1) selon l'une des revendications précédentes, **caractérisé en ce que** le dispositif de largage (7) comprend au moins une goulotte (12) par laquelle les champignons (2) déplacés hors de l'évidement (5) glissent sous l'effet de la gravité dans un récipient (11).

7. Dispositif (1) selon la revendication 6, **caractérisé en ce que** la goulotte (11) comporte un dispositif de retenue (13) pour retenir les champignons (2) sur la goulotte (12) lors du changement de récipient (11).

8. Dispositif (1) selon l'une des revendications précédentes, **caractérisé en ce que** les récipients (11) reposent chacun sur au moins une balance (14) du dispositif (1), dans lequel la balance (14) est adaptée pour détecter le poids des récipients (11).

9. Dispositif (1) selon les revendications 7 et 8, **caractérisé en ce que** la balance (14) est adaptée pour envoyer un signal au dispositif de retenue (13) afin de retenir les champignons (2) sur la goulotte (12) lorsqu'un poids cible de champignons (2) dans un récipient (11) a été atteint sur la balance (14).

10. Dispositif (1) selon l'une des revendications précédentes, **caractérisé en ce qu'**il est prévu un dispositif de transport de récipients (15) qui est conçu pour effectuer automatiquement un changement des récipients (11) en évacuant des récipients (11) remplis de champignons (2) et en livrant des récipients (11) vides.

11. Dispositif (1) selon les revendications 8 et 10, **caractérisé en ce que** le dispositif de transport de récipients (15) est conçu pour faire avancer les récipients (11) par étapes à chaque fois qu'un poids correspondant à une fraction d'un poids de consigne est détecté sur la balance (14), afin de garantir un remplissage uniforme des récipients (11).

12. Dispositif (1) selon l'une des revendications précédentes, **caractérisé en ce que** le dispositif de largage (7) comprend au moins une bande de tamisage (19), sur laquelle les champignons (2) déplacés hors de l'évidement (5) tombent sous l'effet de la gravité, dans lequel la bande de tamisage (19) est conçue pour que le substrat adhérent soit séparé des champignons (2) qui la frappent et tombe à travers la bande de tamisage (19), tandis que les champignons (2), libres du substrat séparé, continuent à être transportés de la bande de tamisage (19) tombent dans un récipient (11).

13. Dispositif (1) selon la revendication 12, **caractérisé en ce que** le dispositif de largage (7) comprend au moins une goulotte (12) par laquelle les champignons (2) déplacés hors de l'évidement (5) glissent sous l'effet de la gravité sur la bande de tamisage (19).

14. Dispositif (1) selon l'une des revendications précédentes, **caractérisé en ce qu'**au moins un dispositif d'éjection (21) du dispositif (1) est adapté pour déplacer les champignons (2) récoltés sur le substrat hors des évidements marqués (20) et pour les transporter dans un récipient de collecte séparé.

15. Dispositif (1) selon la revendication 14, **caractérisé en ce que** le dispositif d'éjection (21) est réalisé sous la forme d'un levier, dans lequel le levier (21) est conçu pour pivoter au-dessus de la bande transporteuse (4) dans une position de préhension et pour éjecter les champignons (2) récoltés sur le substrat hors des évidements marqués (20) latéralement par rapport à la bande transporteuse (4), en faisant pivoter le levier (20) en arrière dans une position d'éjection à l'écart de la bande transporteuse (4).

16. Dispositif (1) selon la revendication 14 ou 15, **caractérisé en ce que** le dispositif d'éjection (21) comprend un capteur pour détecter des couleurs, les évidements marqués (20) étant marqués en couleur sur la bande transporteuse (4), dans lequel le capteur est conçu pour émettre un signal afin d'actionner le dispositif d'éjection (21) lorsqu'un évidement marqué en couleur (20) est détecté.

17. Dispositif (1) selon l'une des revendications précédentes, **caractérisé en ce qu'**au moins deux bandes transporteuses (4) s'étendant parallèlement l'une à l'autre sont prévues pour recevoir les champignons (2) récoltés sur le substrat, triés par taille et répartis sur les au moins deux bandes transporteuses (4), au moins un dispositif de largage (7) étant associé à chaque bande transporteuse (4).

18. Dispositif (1) selon l'une des revendications précédentes, **caractérisé en ce qu'**au moins une bande transporteuse (4) comporte au moins deux rangées (18) d'évidements (5) pour recevoir les champignons (2) récoltés sur le substrat, triés par taille et répartis sur les au moins deux rangées (18), au moins un dispositif de largage (7) étant associé à la bande transporteuse (4).
